# EUROPEAN PATENT APPLICATION

(11) **EP 3 125 613 A1**
(43) Date of publication of application: **01.02.2017**
(21) Application number: 15768330.1
(22) Date of filing: 23.03.2015
(51) Int. Cl.: H04W 40/22, H04W 4/00, H04W 40/02, H04W 92/18

(54) **SERVER DEVICE AND TERMINAL DEVICE**

(30) Priority: 24.03.2014 JP 2014060625
(71) Applicant: Sharp Kabushiki Kaisha, Sakai City Osaka 590-8522 (JP)
(72) Inventor: KUGE, Yoko, Sakai City Osaka 590-8522 (JP); ARAMOTO, Masafumi, Sakai City Osaka 590-8522 (JP); ENOMOTO, Masayuki, Sakai City Osaka 590-8522 (JP)
(74) Representative: Müller-Boré & Partner Patentanwälte PartG mbB
(86) International application number: PCT/JP2015/058735
(87) International publication number: WO 2015/146910

(57) **Abstract**

A server device or a terminal device can perform switching of a path or a communication channel between an infrastructure communication through a network such as an EPC, and a Relay communication through a direct communication with a Relay UE, and can continuously provide a service. A routing information request message includes at least identification information indicating that switching of a communication is required. A third terminal device having a relay function is selected based on the routing information request message. A routing update instruction message which is a response to the routing information request message and includes information of the third terminal device is transmitted to the first terminal device. A direct communication with the third terminal device is performed by using LTE, so as to perform an instruction of communicating with the first terminal device. Thus, a communication channel is switched.

## Description

### Technical Field

The present invention relates to a server device and the like.

### Background Art

In the 3rd Generation Partnership Project (3GPP) in which the standardization activity for the recent mobile communication system is performed, specification of an evolved packet system (EPS) in which all-IP is realized is performed. In the 3GPP, an access system connected to the EPS is examined under an environment of a wireless LAN, in addition to an environment of LTE.

In the 3GPP, examination of proximity-based services (ProSe) is performed in specifications of the EPS. The ProSe has a function (discovery) of discovering that UEs are adjacent to each other, and a function (direct communication) of establishing a direct communication between UEs, without passing through a core network or a base station.

In the ProSe, a communication is performed without passing through a base station or a core network to which an access network is connected, and thus it is possible to avoid (congestion avoidance) congestion in the access network or the core network, and to expect an offload effect.

In the ProSe, a service in which a UE set as a communication target UE of a direct communication is searched for and is detected is required for establishing a direct communication channel. In the ProSe, two methods are examined as the detection method. The first method is a method (below "direct discovery") in which a UE directly performs discovery. The second method is a method (below "EPS discovery") in which detection is performed through an access network or a core network. Here, a ProSe service is provided by a mobile carrier, and approval by the mobile carrier is required for using the ProSe service. Thus, in the 3GPP, a ProSe server is required for realizing the ProSe service, as a functional unit which causes a mobile carrier to manage a ProSe service in a packet data network (PDN) or a core network. That is, in the ProSe, a communication carrier handles establishment, verification, and the like of a communication channel for a direct communication, unlike tethering.

In the ProSe, it is examined that two methods are used for a direct communication channel between UEs. The first method is a method using an LTE access technology. The second method is a method using a wireless LAN (WLAN) access technology.

In the ProSe, non-Public Safety and Public Safety are defined. In the non-Public Safety, a commercial service by a mobile carrier is assumed, and the service is usable only in a case where a UE is in coverage of an LTE base station. In the Public Safety, a use by an emergency radio system is assumed, and the use is also possible in a case where a UE is not in coverage of an LTE base station (eNB), in addition to the case where the UE is in the coverage of the LTE base station.

In the ProSe, a UE-to-Relay Network through a Relay UE is examined. A direct communication between the Relay UE and at least any UE is established, and a communication through only the Relay UE or a communication from the Relay UE through an access network or a core network is available.

The direct communication between a Relay UE and a ProSe UE is switched by whether or not the UE is in coverage of a base station, or triggering of other factors. In the 3GPP, it is proposed that examination of a service continuing method between a direct communication of a ProSe, and an infrastructure communication through the conventional network is required.

### Citation List

### Non Patent Literature

NPL 1: 3GPP TS23.401 Technical Specification Group Services and System Aspects, General Packet Radio Service(GPRS) enhancements for Evolved Universal Terrestrial Radio Access Network(E-UTRAN) access
NPL 2: 3GPP TR23.703 Technical Specification Group Services and System Aspects, Study on architecture enhancements to support Proximity-based Services (ProSe)

### Summary of Invention

### Technical Problem

In a ProSe technology, it is necessary that a UE (terminal device) can establish communication channels of two types of paths, that is, a path on which a direct communication with at least one UE is performed, and a path on which communication is performed by using an infrastructure path through a core network such as an EPC.

The above two communication routes are switched to each other by an internal factor and an external factor of the UE, such as moving of the UE or a change of an environment. A UE or a network has a necessity that the above factors are detected and thus switching of a path or a communication channel can be determined.

However, a method in which a UE or a network performs switching between the above two communication channels has not been disclosed until now.

To solve the above-described problem, an object of the present invention is to provide a terminal device and the like used for causing the terminal device or a server device to determine switching of a communication channel or a path for at least two terminal devices or more, and to perform the switching.

### Solution to Problem

To solve the above-described problem, there is provided a server device according to the present invention. The server device receives a routing-information update request message transmitted by a second terminal device, which performs communication with a first terminal device through a core network, from the first terminal device. The routing-information update request message includes at least identification information indicating that switching of a communication is required. The server device selects a third terminal device having a relay function, based on the identification information. The server device transmits a routing update instruction message which is a response to the routing-information update request message, and includes information of the third terminal device, to the first terminal device, and performs an instruction of performing a direct communication with the third terminal device by using LTE, so as to communicate with the first terminal device.

According to the present invention, there is provided a server device adapted to lead switching between a first communication in which a communication with a first terminal device is performed through a core network of a second terminal device, and a second communication in which the second terminal device performs a direct communication with a third terminal device so as to communicate with the first terminal device, to select the third terminal device having a relay function; and to transmit a routing update instruction message including information of the third terminal device, to the second terminal device, and perform an instruction of switching to the second communication.

According to the present invention, there is provided a terminal device which is a first terminal device which performs a communication with a second terminal device through a core network. The first terminal device is adapted to transmit a routing-information update request message including at least identification information, to a server device by detecting a trigger of switching of a path, the identification information indicating that switching of a communication is required; receive a routing update instruction message including information of a third terminal device which has been selected by the server device and has a relay function, from the server device; and perform a direct communication with the third terminal device in accordance with the routing update instruction message by using LTE, so as to communicate with the second terminal device.

### Advantageous Effects of Invention

According to the present invention, the server device or the terminal device can perform switching of a path or a communication channel between an infrastructure communication through a network such as an EPC, and a Relay communication through a direct communication with a Relay UE, and thus can continuously provide a service.

### Brief Description of Drawings

[Fig. 1] Fig. 1 is a diagram illustrating a schematic structure example of a radio communication system.
[Fig. 2] Fig. 2 is a diagram illustrating a detailed structure of the radio communication system.
[Fig. 3] Fig. 3 is a diagram illustrating a functional structure of a terminal device (UE).
[Fig. 4] Fig. 4 is a diagram illustrating an example of each data structure stored in a storage unit.
[Fig. 5] Fig. 5 is a diagram illustrating a functional structure of a terminal device (Relay UE).
[Fig. 6] Fig. 6 is a diagram illustrating an example of each data structure stored in a storage unit.
[Fig. 7] Fig. 7 is a diagram illustrating a functional structure of a ProSe server.
[Fig. 8] Fig. 8 is a diagram illustrating an example of each data structure stored in a storage unit.
[Fig. 9] Fig. 9 is a diagram illustrating an operation outline in a first embodiment.
[Fig. 10] Fig. 10 is a diagram illustrating an outline of a communication in the first embodiment.
[Fig. 11] Fig. 11 is a diagram illustrating an outline of a packet in the first embodiment.
[Fig. 12] Fig. 12 is a diagram illustrating the outline of a packet in the first embodiment.
[Fig. 13] Fig. 12 is a diagram illustrating the outline of a packet in the first embodiment.
[Fig. 14] Fig. 14 is a diagram illustrating a flow of processing in the first embodiment.
[Fig. 15] Fig. 15 is a diagram illustrating a first processing example in the first embodiment.
[Fig. 16] Fig. 16 is a diagram illustrating a second processing example in the first embodiment.
[Fig. 17] Fig. 17 is a diagram illustrating an operation flow of the terminal device in the first embodiment.
[Fig. 18] Fig. 18 is a diagram illustrating an operation flow of the terminal device (Relay UE) in the first embodiment.
[Fig. 19] Fig. 19 is a diagram illustrating an operation flow of the ProSe server in the first embodiment.
[Fig. 20] Fig. 20 is a diagram illustrating a first processing example in a second embodiment.
[Fig. 21] Fig. 21 is a diagram illustrating a second processing example in the second embodiment.
[Fig. 22] Fig. 22 is a diagram illustrating an operation flow of the terminal device in the second embodiment.
[Fig. 23] Fig. 23 is a diagram illustrating an operation flow of the ProSe server in the second embodiment.
[Fig. 24] Fig. 24 is a diagram illustrating a flow of processing in a third embodiment.
[Fig. 25] Fig. 25 is a diagram illustrating a first processing example in a fourth embodiment.
[Fig. 26] Fig. 26 is a diagram illustrating a second processing example in the fourth embodiment.
[Fig. 27] Fig. 27 is a diagram illustrating an operation flow of the terminal device in the fourth embodiment.
[Fig. 28] Fig. 28 is a diagram illustrating an operation flow of the terminal device (Relay UE) in the fourth embodiment.
[Fig. 29] Fig. 29 is a diagram illustrating a first processing example in a fifth embodiment.
[Fig. 30] Fig. 30 is a diagram illustrating a second processing example in the fifth embodiment.
[Fig. 31] Fig. 31 is a diagram illustrating an operation flow of the terminal device in the fifth embodiment.
[Fig. 32] Fig. 32 is a diagram illustrating an operation flow of the ProSe server in the fifth embodiment.
[Fig. 33] Fig. 33 is a diagram illustrating a flow of processing in a sixth embodiment.
[Fig. 34] Fig. 34 is a diagram illustrating a flow of the processing in the sixth embodiment.
[Fig. 35] Fig. 35 is a diagram illustrating a flow of processing in a seventh embodiment.

### Description of Embodiments

Hereinafter, a best mode for carrying out the present invention will be described with reference to the drawings. In this embodiment, a form of a mobile communication system in a case where the present invention is applied will be described as an example.

### [1. First Embodiment]

Details of a radio communication technology according to the embodiment of the present invention will be described below with reference to the drawings.

### [1.1. Outline Of Communication System]

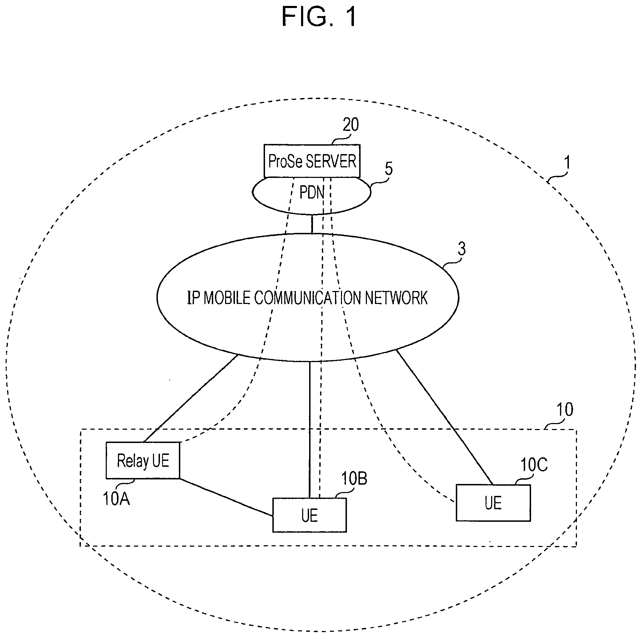

Fig. 1 is a functional block diagram illustrating a schematic structure example of a radio communication system according to the embodiment of the present invention.

A radio communication system 1 illustrated in Fig. 1 is a network which includes an IP mobile communication network 3 and a PDN 5. A ProSe server 20 is connected to the packet data network (PDN) 5, and a UE 10 is connected to the IP mobile communication network 3.

As the UE 10, a Relay UE (mobile station apparatus, terminal device) 10A which has a Relay function for ProSe, and UEs (mobile station apparatuses, terminal devices) 10B and 10C which have a ProSe function for the ProSe are provided in the embodiment.

Here, the PDN 5 and the UEs 10 (Relay UE 10A, UEs 10B and UE 10C) are connected to each other through the IP mobile communication network 3. As in an example illustrated in Fig. 1, a communication channel in a direct communication of the ProSe may be established between the Relay UE 10A and the UE 10B. If a direct distance between the Relay UE 10A and the UE 10C or other UEs is sufficiently close, the Relay UE 10A can establish a communication channel for the direct communication.

The ProSe server 20 is a verification server for managing a communication between the Relay UE 10A, the UE 10B, and the UE 10C. In Fig. 1, the ProSe server 20 is constituted so as to be included in the PDN 5, but the ProSe server 20 may be separated from the PDN 5.

Here, UEs 10 may be connected to the same mobile carrier network or may be connected to mobile carrier networks which are different from each other. A broadband network operated by a fixed-line communication common carrier may be provided.

The broadband network is an IP communication network in which connection is performed by an asymmetric digital subscriber line (ADSL) and the like, and which provides a high speed communication by using a digital communication line such as an optical fiber, and is operated by a communication carrier. The broadband network is not limited thereto, and may be a network in which radio access is performed by the worldwide interoperability for microwave access (WiMAX) and the like.

Each of the UEs 10 (Relay UE 10A, UE 10B, and UE 10C) is a communication terminal which performs connection by using an access system such as LTE or WLAN. Each of the UEs 10 has a communication interface of 3GPP LTE or a communication interface of WLAN mounted therein, and performs connection by using the communication interface, and thus can be connected to an IP access network.

The PDN 5 is a network which provides a network service in which data is transmitted and received in a form of a packet. For example, the PDN 5 is a service network which provides a service based on the Internet or an IMS.

The PDN 5 is connected to the IP access network by using a wired communication line. For example, the PDN 5 is constructed by the ADSL, the optical fiber, or the like. However, the PDN 5 is not limited thereto, and may be a radio access network such as LTE, WLAN, or the worldwide interoperability for microwave access (WiMAX).

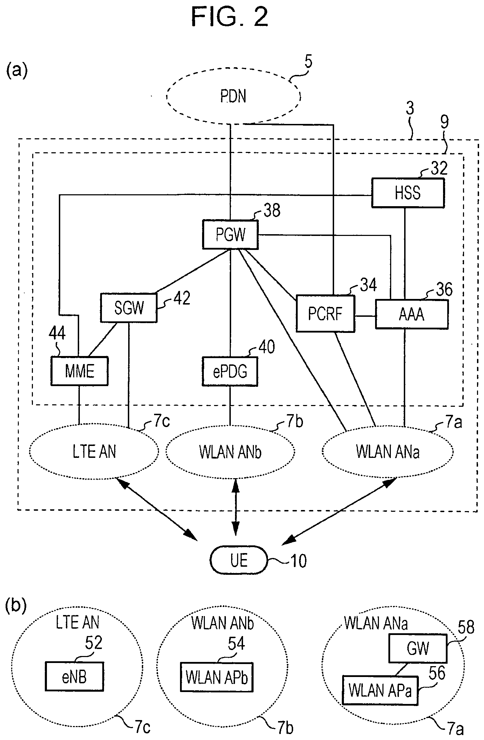

Fig. 2 illustrates a detailed structure example of the radio communication system 1 illustrated in Fig. 1. In the structure example of the radio communication system 1 illustrated in Fig. 2, the radio communication system 1 includes the UE 10 (any terminal device of the Relay UE 10A, the UE 10B, and the UE 10C), the IP mobile communication network 3, and the PDN 5. In addition to the UEs 10 described in this specification, a plurality of UEs can be connected to the IP mobile communication network 3.

The IP mobile communication network 3 is constituted by a core network 9 and a radio access network (for example, LTE AN 7c, WLAN ANb 7b, or WLAN ANa 7a). The core network 9 includes a home subscriber server (HSS) 32, an AAA (authentication, authorization, accounting) 36, a PCRF (policy and charging rules function) 34, a packet data network gateway (PGW) 38, an enhanced packet data gateway (ePDG) 40, a serving gateway (SGW) 42, and a mobile management entity (MME) 44.

The radio access network may be constituted by a plurality of different access networks. Each of the access networks is connected to the core network 9. Each of the UEs 10 can be wirelessly connected to the radio access network.

As the radio access network constitutes an LTE access network (LTE AN 7c) which can be connected to an LTE access system or an access network (WLAN AN 7a, 7b) which can be connected to a WLAN access system.

The access network which can be connected to the WLAN access system may be constituted by a WLAN access network b (WLAN ANb 7b) and a WLAN access network a (WLAN ANa 7a). The WLAN access network b (WLAN ANb 7b) is connected to the ePDG 40 which is set as a connection device to the core network 9. The WLAN access network a (WLAN ANa 7a) is connected to the PGW 38, the PCRF 34, and the AAA 36.

Each device in the IP mobile communication network 3 is constituted similarly to the conventional device in a mobile communication system using an EPS. Thus, detailed descriptions will be omitted. Each device will be simply described below.

The PGW 38 is connected to the PDN 5, the SGW 42, the ePDG 40, the WLAN ANa 7a, the PCRF 34, and the AAA 36. The PGW 38 performs distribution of user data, as a gateway device between the PDN 5 and the core network 9.

The SGW 42 is connected to the PGW 38, the MME 44, and the LTE AN7c, and the SGW 42 performs distribution of user data, as a gateway device between the core network 9 and the LTE AN 7c.

The MME 44 is an access control device which is connected to the SGW 42, the LTE AN 7c, and the HSS 32, and performs an access control for the UE 10 through the LTE AN 7c.

The HSS 32 is a management node which is connected to the MME 44 and the AAA 36, and manages subscriber information. The subscriber information in the HSS 32 is used as a reference, for example, when an access control for the MME 44 is performed.

The AAA 36 is connected to the PGW 38, the HSS 32, the PCRF 34, and the WLAN ANa 7a, and performs an access control for the UE 10 which is connected through the WLAN ANa 7a.

The PCRF 34 is connected to the PGW 38, the WLAN ANa 7a, the AAA 36, and the PDN 5, and performs QoS management for data distribution.

The ePDG 40 is connected to the PGW 38 and the WLAN ANb 7b, and performs distribution of user data, as a gateway device between the core network 9 and the WLAN ANb 7b.

As illustrated in Fig. 2(b), each of the radio access networks includes a device (for example, base station apparatus or access point device) and the like to which the UE 10 is actually connected. As a device used for connection, a device adapted to the radio access network is considered.

In the embodiment, the LTE AN 7c includes an eNB 52. The eNB 52 is a radio base station to which a UE 10 is connected in the LTE access system. The LTE AN 7c may include one or a plurality of radio base stations.

The WLAN ANa 7a includes a WLAN APa 56 and a gateway (GW) 58. The WLAN APa 56 is a radio base station to which a UE 10 is connected in a WLAN access system which has reliability for a business operator operating the core network 9. The WLAN ANa 7a may include one or a plurality of radio base stations. The GW 58 is a gateway device between the core network 9 and the WLAN ANa 7a. The WLAN APa 56 and the GW 58 may be constituted as a single device.

Even in a case where a business operator operating the core network 9 is different from a business operator operating the WLAN ANa 7a, realization with the above-described constitution may be performed in accordance with contracts or agreements.

The WLAN ANb 7b includes a WLAN APb 54. The WLAN APb 54 is a radio base station to which a UE 1 is connected in the WLAN access system in a case where there is no fiduciary relation with the business operator operating the core network 9. The WLAN ANb 7b may include one or a plurality of radio base stations.

In this manner, the WLAN ANb 7b is connected to the core network 9 by using the ePDG 40 which is a device included in the core network 9, as a gateway. The ePDG 40 has a security function for ensuring safety.

In this specification, a statement in that UEs 10 are respectively connected to each radio access network means that the UEs 10 are connected to base station apparatuses, access points, or the like which are included in the radio access networks, respectively. Data, a signal, or the like which is transmitted and received also passes through the base station apparatus or the access point.

### [1.2 Structure of Device]

A functional structure of each device in the embodiment will be described. Here, functional structures of the ProSe server 20 and each of the UE 10A, the UE 10B, and UE 10C in Fig. 1 will be described.

### [1.2.1 Structure of UE]

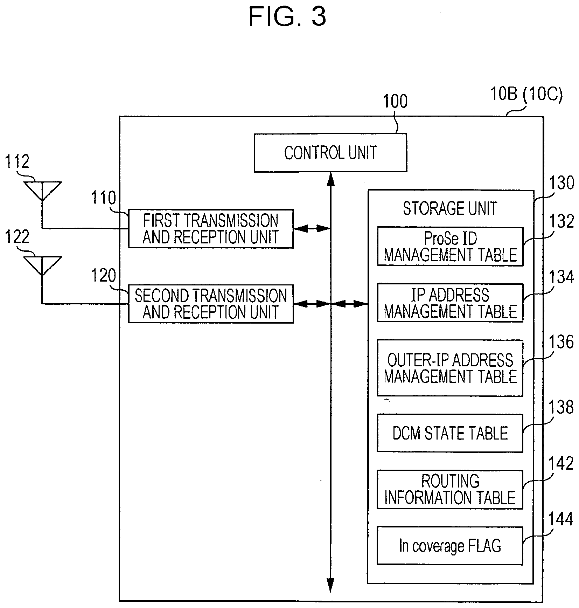

Firstly, a structure of a general UE other than the Relay UE will be described with reference to Fig. 3. In the embodiment, the UE 10B and the UE 10C correspond to the general UE. The UEs may be radio communication terminals having a ProSe function, or may be portable telecommunication terminals which perform transmission and reception of data in a radio communication by using the LTE access scheme. The UEs may be terminal devices which exchange information in such a form referred to as machine-to-machine.

Fig. 3 illustrates a functional structure of the UE 10B in the embodiment. The functional structure of the UE 10C is the same as that of the UE 10B, and thus descriptions thereof will be omitted.

The UE 10B includes a control unit 100, a first transmission and reception unit 110 to which a transmit and receive antenna 112 is connected, a second transmission and reception unit 120 to which a transmit and receive antenna 122 is connected, and a storage unit 130.

The control unit 100 is a function unit for controlling the UE 10B. The control unit 100 is a function unit that reads various programs stored in the storage unit 130 and executes the read program. For example, the control unit 100 is constituted by a CPU and the like.

The first transmission and reception unit 110 and the second transmission and reception unit 120 are function units for performing radio communication with an external terminal device or a base station apparatus. For example, the first transmission and reception unit 110 is a function unit that transmits and receives radio communication data by using the LTE access scheme. The first transmission and reception unit 110 is constituted by a transmission unit and a reception unit. The transmission unit may transmit control information through an LTE base station, and the reception unit may transmit data or control information through an LTE base station.

The second transmission and reception unit 120 is a function unit which may perform direct communication with other UEs by using data or control information, without passing through an LTE base station. The second transmission and reception unit 120 is constituted by a transmission unit and a reception unit. The transmission unit may transmit data or control information without passing through an LTE base station.

A switch may be provided between the first transmission and reception unit 110, the second transmission and reception unit 120, and the transmit and receive antenna. The switch may be used for switching a function unit for performing transmission and reception. The first transmission and reception unit 110 and the second transmission and reception unit 120 may be constituted as one transmission and reception unit.

The storage unit 130 is a function unit that stores a program, data, and the like required for an operation of the UE 10B. The storage unit 130 is constituted by, for example, a semiconductor memory, a hard disk drive (HDD), and the like. The storage unit 130 stores a ProSe ID management table 132, an IP address management table 134, an outer IP address management table 136, a DCM state table 138, a routing information table 142, and an In coverage flag 144.

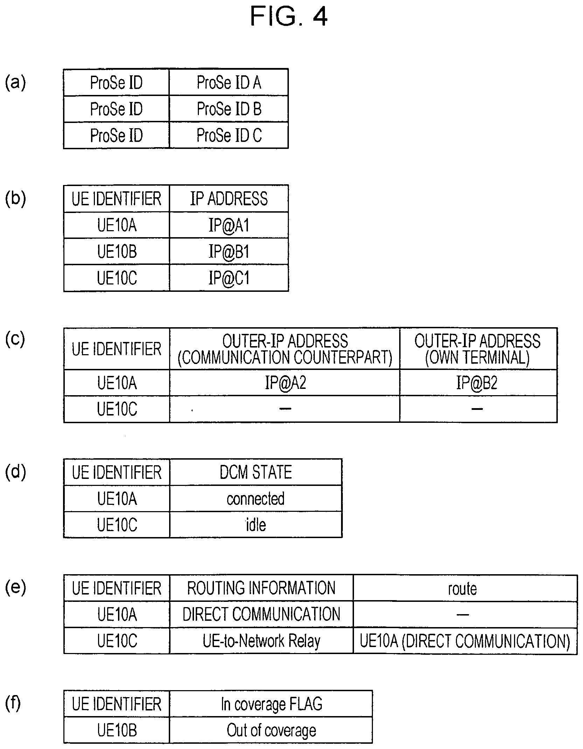

Fig. 4 illustrates an example of each information element stored in the storage unit 130. The information element will be described below with reference to Fig. 4.

Fig. 4(a) illustrates an example of the ProSe ID management table 132 stored in the storage unit 130 of the UE 10B. Specifically, a ProSe ID is stored as an identifier, in the ProSe ID management table 132.

In Fig. 4(a), an identifier (for example, "ProSe ID B") for identifying the UE 10B, and an identifier (for example, "ProSe ID A") for identifying the UE 10A which is in the vicinity of the UE 10B and can perform a direct communication are managed. An identifier (ProSe ID C) of the UE 10C which is a communication counterpart is also managed. A ProSe ID may be an ID for identifying each UE, or may be an ID for identifying an application. The ProSe ID may be an ID indicating that the ProSe server 20 authenticates a UE.

In this manner, the UE 10B can store a plurality of ProSe IDs, and may store an identifier "ProSe ID B" of the own terminal (UE 10B), an identifier "ProSe ID C" of the communication counterpart (UE 10C), an identifier "ProSe ID A" of a terminal (Relay UE 10A) corresponding as a Relay UE, and an identifier of another UE in addition to the identifier of the own terminal.

As the ProSe ID, information for identifying an application or information for identifying a communication business or a country may be included in addition to the information for identifying each UE (Relay UE 10A, UE 10B, UE 10C, and the like).

The IP address management table 134 is a table for managing an IP address. For example, a UE identifier and an IP address are managed and stored in association with each other.

Here, Fig. 4(b) illustrates an example of a data structure of the IP address management table 134. The IP address management table 134 stores an identifier (for example, "UE 10B") of the US 10B, and an IP address (for example, "IP@B1") of the UE 10B which is assigned when the UE 10B is attached to the IP mobile communication network.

The IP address management table 134 may store an IP address "IP@C1" of the UE 10C functioning as a communication counterpart or an IP address "IP@A1" of the Relay UE 10A which allows a direct communication.

The outer IP address management table 136 is a table for managing and storing an outer IP address.

Here, Fig. 4(c) illustrates an example of a data structure of the outer IP address management table 136. In a case of Fig. 4(c), an example of the outer IP address management table 136 for a UE which has established a direct communication channel is illustrated. In Fig. 4(c), the outer IP address management table 136 is stored in the storage unit 130 of the UE 10B.

For example, an outer IP address (for example, "IP@A2") of the Relay UE 10A functioning as a communication counterpart and an outer IP address (for example, "IP@B2") of the UE 10B which is the terminal used in the communication are managed in the direct communication with the UE 10A which has established a direct communication channel for the UE 10B.

Because the UE 10C performing a direct communication is not possible, the outer IP address regarding the UE 10C is not managed in the embodiment.

The DCM state table 138 is a table for managing a state of a direct connected mode (DCM) of the UE 10B under a relationship with another terminal device. That is, the DCM state is managed for each of other UEs.

Here, Fig. 4(d) illustrates an example of a data structure of the DCM state table 138. Here, in the DCM state table 138, a "connected" mode which is in a state where transmission and reception of data is performed on a communication channel of the direct communication, and an "idle" mode which is in a state where transmission and reception of data is not performed and resources of a radio communication channel between the own terminal and a base station are released can be managed.

In a case of Fig. 4(d), DCM states for the UE 10A which can perform the direct communication, and for the UE 10C are stored.

The routing information table 142 is a table in which routing information obtained by associating the communication counterpart and a path with each other is stored. In a case where a path is associated with UE-to-Network Relay, identification information of the Relay UE may be further associated and stored in the routing information. The routing information is stored for each UE with which the UE 10B communicates.

An example of a data structure of the routing information table 142 will be described with reference to Fig. 4(e). Here, in the routing information table 142, whether communication with a communication counterpart is performed by using a direct communication channel, whether communication is performed by using an infrastructure communication, and whether a UE-to-Network Relay communication is performed by using a certain Relay UE are stored. That is, as illustrated in Fig. 4(e), the UE 10B is connected to the UE 10A on a route of "direct communication".

In a case where the UE-to-Network Relay communication is performed, a constitution which also indicates a route (Relay UE) may be made. In a case where a Relay UE is described as a route, a communication route (infrastructure communication or direct communication) for the Relay UE can be stored. For example, in a case of Fig. 4(e), a route for the UE 10C is made with passing through the UE 10A. Here, the UE 10B and the UE 10A perform the direct communication with each other. It is understood that the UE 10C is connected in a mode of "UE-to-Network Relay".

The In coverage flag 144 is a field in which an In coverage flag of the own terminal is stored.

Here, in an example of Fig. 4(f), regarding the In coverage flag, a case where the UE 10B is in a state (Out of coverage) of being out of coverage of a network access is illustrated. The coverage of a network access means that the UE 10B is in an area formed by the eNB 52 functioning as a base station of LTE.

### [1.2.2 Structure of Relay UE]

A functional structure of the UE 10A in a case of functioning as a Relay UE, among the UEs 10 will be described. The Relay UE 10A may be a radio communication terminal which has a ProSe function and a Relay function of the ProSe, or may be portable telecommunication terminals which perform transmission and reception of data in a radio communication by using the LTE access scheme. The UE 10A may be a terminal device which performs exchange of information between devices in such a form referred to as machine-to-machine. In the specification, the UE 10A may be described as a Relay UE in order to clarify the descriptions in a case where the UE 10A is used for the Relay function.

Here, the Relay function of the ProSe has a function of performing Relay of traffic between a UE having a function of the ProSe and the core network.

Specifically, a UE having a Relay function of the ProSe establishes a direct communication channel based on LTE, receives user data which has been transmitted from a UE which is directly connected, and transmits the received user data to the core network. In this manner, the UE transmits an IP packet including user data to a transmission destination of the user data through the core network. A UE having a Relay function of the ProSe establishes a direct communication channel based on LTE, receives user data which has been transmitted to a UE which is directly connected, from the core network and transmits the received user data to the UE which is directly connected.

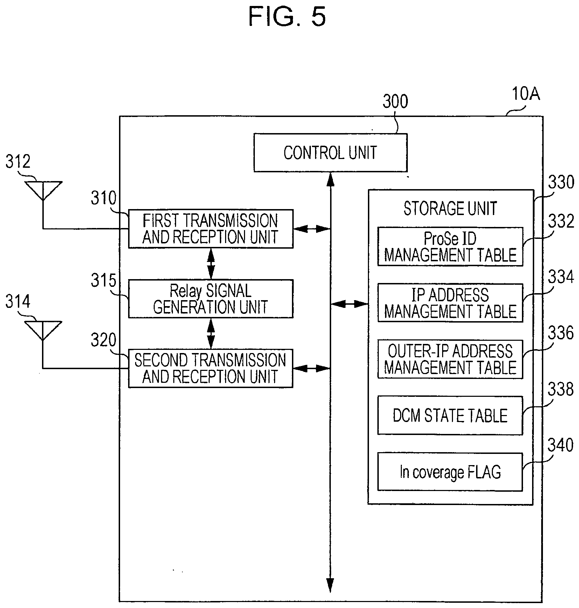

Fig. 5 illustrates a functional structure of the UE 10A in the embodiment. The UE 10A includes a first transmission and reception unit 310 (transmit and receive antenna 312), a second transmission and reception unit 320 (transmit and receive antenna 314), a Relay signal generation unit 315, and a storage unit 330, in addition to a control unit 300.

The control unit 300 is a function unit for controlling the UE 10A. The control unit 300 is a function unit that reads various programs stored in the storage unit 330 and executes the read program. For example, the control unit 300 is constituted by a CPU and the like.

The first transmission and reception unit 310 is a function unit which has a function of recognizing a Relay signal which has been received through an LTE base station, and outputting the recognized Relay signal to the Relay signal generation unit 315, and a function of inputting a signal which has been output from the Relay signal generation unit 315, in addition to the function similar to the first transmission and reception unit 110 of the UE 10B.

Similarly, the second transmission and reception unit 320 is a function unit which has a function of decapsulating a signal which has been received through LTE, and transmitting the decapsulated signal to the Relay signal generation unit 315, and a function of causing the second transmission and reception unit 320 to encapsulate a signal which has been input from the Relay signal generation unit 315, in addition to the function of the second transmission and reception unit 120 of the UE 10B.

The Relay signal generation unit 315 performs processing on data which has been input from the second transmission and reception unit 320 or the first transmission and reception unit 310, and outputs the processed data to the second transmission and reception unit 320 or the first transmission and reception unit 310, based on a control of the control unit 300.

For example, in a case where data is transmitted to the UE 10C from the UE 10B, in order to perform direct transmission and reception from the UE 10B to the Relay UE 10A, a signal received by the UE 10A is output to the second transmission and reception unit 320. Data input to the second transmission and reception unit 320 is decapsulated, and the decapsulated data is output to the Relay signal generation unit 315.

Processing of which an instruction is performed by the control unit 300 is performed on a signal input to the Relay signal generation unit 315. Here, since it is assumed that communication is performed from the Relay UE 10A to the UE 10C through a network, the signal input to the Relay signal generation unit 315 is input to the first transmission and reception unit 310.

In the embodiment, a case where the first transmission and reception unit 310, the Relay signal generation unit 315, and the second transmission and reception unit 320 are constituted so as to be separate from each other is described. However, the first transmission and reception unit 310, the Relay signal generation unit 315, and the second transmission and reception unit 320 may be constituted as one transmission and reception unit.

The storage unit 330 is a function unit that stores a program, data, and the like required for an operation of the UE 10A. The storage unit 330 is constituted by, for example, a semiconductor memory, a hard disk drive (HDD), and the like. Here, the storage unit 330 stores a ProSe ID management table 332, an IP address management table 334, an outer IP address management table 336, a DCM state table 338, and an In coverage flag 340.

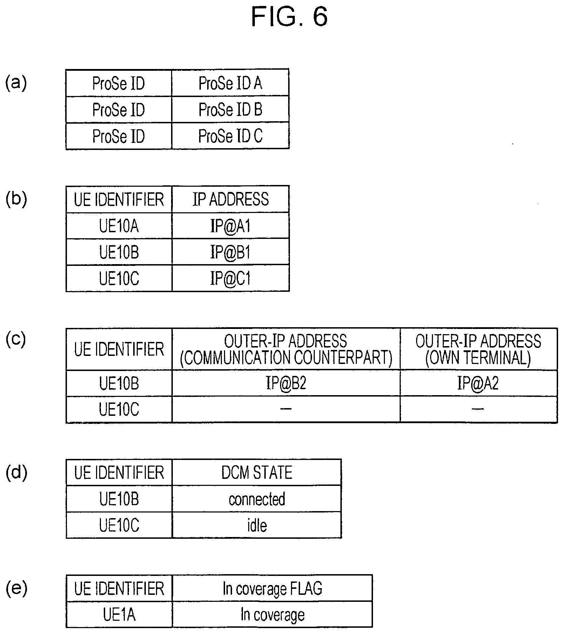

Fig. 6 illustrates an example of each information element stored in the storage unit 330. Here, stored details are different for each terminal, but details managed in each table is similar to those of the table described for the UE 10B.

That is, the ProSe ID management table 332 illustrated in Fig. 6(a) has details similar to those stored in the ProSe ID management table 132. The IP address management table 334 illustrated in Fig. 6(b) has details similar to those stored in the IP address management table 134. The outer IP address management table 336 illustrated in Fig. 6(c) has details similar to those stored in the outer IP address management table 136. The DCM state table 338 illustrated in Fig. 6(d) has details similar to those stored in the DCM state table 138. The In coverage flag 340 illustrated in Fig. 6(e) has details similar to those stored in the In coverage flag 144. Thus, detailed descriptions thereof will be omitted.

For example, the ProSe ID management table 332 illustrated in Fig. 6(a) stores identifiers of a plurality of UEs which include the Relay UE 10A. IP addresses of a plurality of UEs which include the Relay UE 10A are stored in the IP address management table 334 illustrated in Fig. 6(b). The outer IP address management table 336 illustrated in Fig. 6(c) stores an outer IP address for the direct communication for each of the UEs. The DCM state table 338 illustrated in Fig. 6(d) stores a DCM state between each of the UEs and the Relay UE 10A. The In coverage flag 340 illustrated in Fig. 6(e) stores an In coverage flag of the own terminal (Relay UE 10A).

### [1.2.3 Structure of ProSe server]

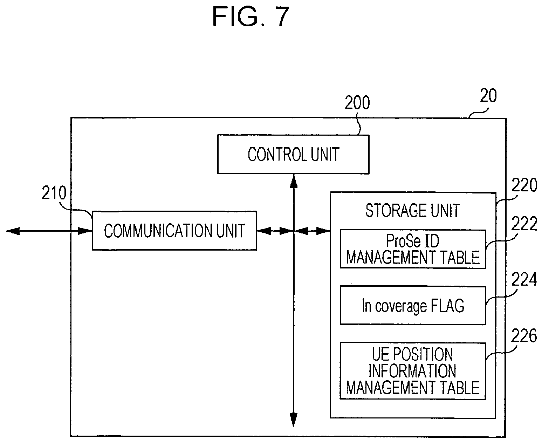

A functional structure of the ProSe server 20 in the embodiment will be described with reference to Fig. 7. The ProSe server 20 is a verification server managed by a mobile carrier which performs neighboring detection by the ProSe or performs communication by the ProSe.

The ProSe server 20 is constituted by a control unit 200, a communication unit 210, and a storage unit 220.

The control unit 200 is a function unit for controlling the ProSe server 20. The control unit 200 is a function unit that reads various programs stored in the storage unit 220 and executes the read program.

The communication unit 210 is a function unit used when the ProSe server 20 performs a communication. In the embodiment, the communication unit 210 is an IP mobile communication network interface unit for being connected to the IP mobile communication network 3.

The storage unit 220 is a function unit which stores a program, data, and the like required for various operations of the ProSe server 20. The storage unit 220 is constituted by, for example, a semiconductor memory, a hard disk drive (HDD), and the like.

The storage unit 220 stores a ProSe ID management table 222, an In coverage flag 224, and a UE position information management table 226.

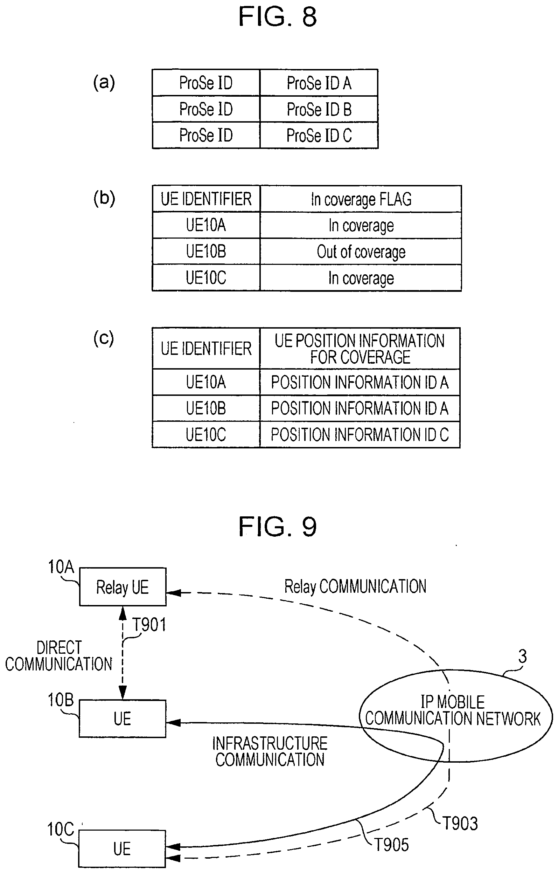

Fig. 8 illustrates an example of each information element stored in the storage unit 220. Here, stored details are different for each terminal, but details of the ProSe ID management table 222 and details of the In coverage flag 224 are similar to those of the tables described for the UE 10B.

That is, the ProSe ID management table 222 illustrated in Fig. 8(a) is similar to the ProSe ID management table 132. The In coverage flag 224 illustrated in Fig. 8(b) is similar to the In coverage flag 144. Thus, detailed descriptions thereof will be omitted.

For example, the ProSe ID management table 222 illustrated in Fig. 8(a) stores an identifier of a UE which is registered as a UE having a ProSe function, in the ProSe server 20. The In coverage flag 224 illustrated in Fig. 8(b) stores an In coverage flag of a UE which is registered as a UE having a ProSe function, in the ProSe server 20.

The UE position information management table 226 is a table for managing position information of a UE which is registered in the ProSe server 20 as a UE which is usable in the ProSe. As illustrated in Fig. 8(c), position information of the UE 10A and the UE 10B corresponds to "position information ID A". Position information of the UE 10C corresponds to "position information ID C".

In this case, it is recognized that the UE 10A and the UE 10B are near to each other, and the direct communication is set to be possible.

The position information ID may be an ID for recognizing position information of each of the UEs 10 (Relay UE 10A, UE 10B, and UE 10C), which is registered as a UE having a ProSe function, in the ProSe server 20. The position information ID may be an eNB ID for identifying a base station, a tracking area id (TAI), or a cell ID.

The position information ID may be an E-UTRAN cell global ID (ECGI). The ECGI is an ID obtained by combining a public land mobile network (PLMN) ID and a cell ID, and indicates position information of a UE. The ProSe server 20 acquires an ECGI from the MME when a PDN connection with the UE is established.

### [1.3 Descriptions of communication]

An outline regarding a communication described in this embodiment will be described below. Fig. 9 is a conceptual diagram illustrating switching of a path performed in the embodiment, switching of a communication channel, and selection of a path or a communication channel.

### [1.3.1 Outline]

In an initial state in the embodiment, the UE 10B and the UE 10C communicate with each other in the infrastructure communication T905 (solid line). The infrastructure communication means a communication performed through a network such as an EPC. The infrastructure communication means a communication in which a PGW is selected as a GW for the PDN, and a PDN connection with the PDN is established.

A certain triggering occurs in a UE or the network, and thus switching is performed from the initial state to a UE-to-Network Relay communication (broken line).

The UE-to-Network Relay communication is a direct communication with the Relay UE 10A or a communication performed through the infrastructure communication.

In the embodiment, while a service continues in the UE-to-Network Relay communication through a direct communication T901 between the UE 10B and the Relay UE 10A, and a Relay communication T903 between the Relay UE 10A and the UE 10C, a path is switched, or a communication channel is switched. In addition, a path or a communication channel is selected.

Here, the Relay communication is an infrastructure communication in which the UE-to-Network Relay communication is set as a purpose. A route is the same as that in the infrastructure communication of the related art. The Relay communication performs transmission and reception through a network such as the EPC.

In the embodiment, the infrastructure communication between the UE 10B and the UE 10C performs the Relay communication by the direct communication T901 between the UE 10B and the Relay UE 10A, and by the infrastructure communication which is performed through the network between the Relay UE 10A and the UE 10C. However, if a distance between the UE 10C and the Relay UE 10A is sufficiently close, the Relay communication may be performed by the direct communication.

### [1.3.2 Flow of Data of Relay by IP Header Encapsulation]

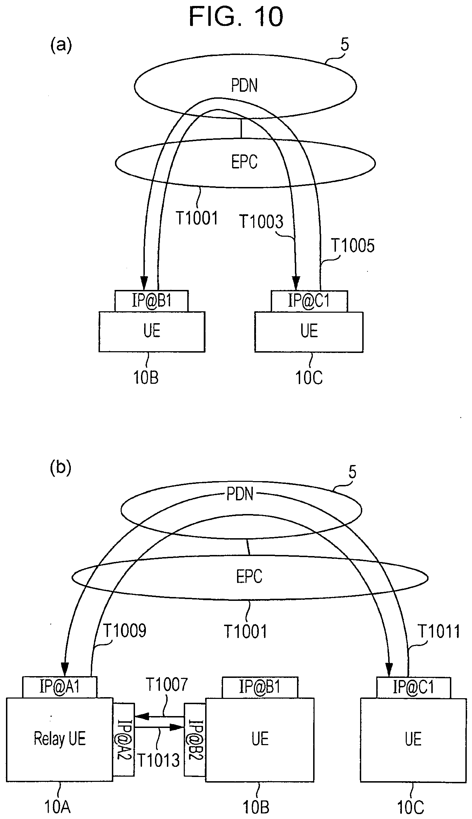

Fig. 10(a) is a diagram illustrating the infrastructure communication between the UE 10B and the UE 10C. The UE 10B transmits data to the UE 10C in the infrastructure communication by using a path T1003. That is, the UE 10C receives data in the infrastructure communication, from the UE 10B by using the path T1003.

The UE 10C transmits data to the UE 10B in the infrastructure communication, by using a path T1005. That is, the UE 10B receives data in the infrastructure communication, from the UE 10C by using the path T1005.

The UE 10B acquires an IP address "IP@B1" which is assigned in an initial attach procedure is performed, from the core network 9. The core network 9 assigns "IP@B1" to the UE 10B, and notifies the UE 10B of the assigned IP address.

Similarly, the UE 10C acquires an IP address "IP@C1" which is assigned in the initial attach procedure, from the core network 9. The core network 9 assigns "IP@C1" to the UE 10C, and notifies the UE 10C of the IP address which has been assigned to the UE 10C.

Fig. 10(b) is a diagram illustrating the UE-to-Network Relay communication between the UE 10B and the UE 10C.

The UE 10B transmits data to the Relay UE 10A in the direct communication by using a path T1007. The Relay UE 10A transmits data to the Relay UE 10B in the direct communication by using a path T1013.

That is, the Relay UE 10A receives data from the UE 10B in the direct communication by using the path T1007. The UE 10B receives data from the Relay UE 10A in the direct communication by using the path T1013.

The Relay UE 10A and the UE 10B performs encapsulation and performs direct communication by using the IP address "IP@A2" and the IP address "IP@B2" which have been assigned for the direct communication by the Relay UE 10A, as outer IPs.

The Relay UE 10A transmits data to the UE 10C in the Relay communication through the network, by using a path T1009. The UE 10C transmits data to the Relay UE 10A in the Relay communication through the network, by using a path T1011.

That is, the UE 10C receives data from the Relay UE 10A in the Relay communication through the network, by using the path T1009. The Relay UE 10A receives data from the UE 10C in the Relay communication through the network, by using the path T1011.

In Figs. 10(a) and 10(b), the Relay UE 10A, the UE 10B, and the UE 10C are attached to the network through the same EPC (T1001). However, the Relay UE 10A, the UE 10B, and the UE 10C may be attached to the network through EPCs which are separated from each other.

### [1.3.3 Descriptions for IP packet]

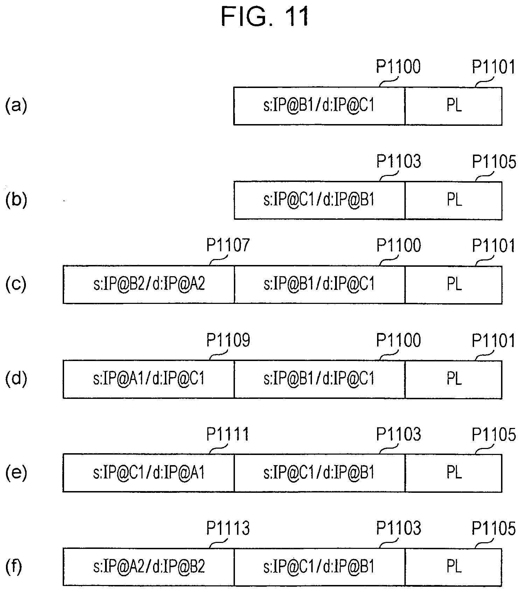

A method of encapsulating three types of IP packets which have a probability of being used in the embodiment will be described below with reference to Figs. 11 to 13.

### (1) Regarding Fig. 11

Fig. 11 illustrates an IP packet including specific user data which is transmitted and received by each of the UEs (Relay UE 10A, UE 10B, and UE 10C) on each of the paths illustrated in Fig. 10.

### (a) UE 10B → (T1003) → UE 10C

Fig. 11(a) illustrates an example of an IP packet which is transmitted to the UE 10C by the UE 10B on the path T1003 (illustrated in Fig. 10(a)) in the infrastructure communication. That is, Fig. 11(a) illustrates an example of an IP packet which is received from the UE 10B by the UE 10C on the path T1003 in the infrastructure communication. The IP packet in Fig. 11(a) is constituted by an IP header P1100 and a payload (PL) P1101. The IP header P1100 indicates that the IP packet is information from the UE 10B to the UE 10C.

Here, the payload is data which is obtained by excluding a header portion, and is originally to be transmitted. The payload portion includes user data which is application data.

### (b) UE 10C → (T1005) → UE 10B

Fig. 11(b) illustrates an example of an IP packet which is transmitted to the UE 10B by the UE 10C on the path T1005 (illustrated in Fig. 10(a)) in the infrastructure communication. That is, Fig. 11(b) illustrates an example of an IP packet which is received from the UE 10C by the UE 10B on the path T1005 in the infrastructure communication. The IP packet in Fig. 11(b) is constituted by an IP header P1103 and a payload (PL) P1105. The IP header P1103 indicates that the IP packet is information from the UE 10C to the UE 10B.

### (c) UE 10B → (T1007) → UE 10A

Fig. 11(c) illustrates an example of an IP packet which is transmitted to the Relay UE 10A by the UE 10B on the path T1007 (illustrated in Fig. 10(b)) in the direct communication. That is, Fig. 11(c) illustrates an example of an IP packet which is received from the UE 10B by the Relay UE 10A on the path T1007 in the direct communication. The IP packet in Fig. 11(c) is constituted by an outer IP header P1107, an IP header P1100, and a payload (PL) P1101. The outer IP header P1107 indicates that the IP packet is information from the UE 10B to the Relay UE 10A. The IP header P1100 indicates that the IP packet is a packet transmitted from the UE 10B to the UE 10C.

That is, the IP packet illustrated in Fig. 11(c) is an IP packet in which the outer IP header P1107 is added to the leading of an IP packet which is transmitted to the UE 10C by the UE 10B in the infrastructure communication illustrated in Fig. 11(a).

### (d) UE 10A → (T1009) → UE 10C

Fig. 11(d) illustrates an example of an IP packet which is transmitted to the UE 10C by the Relay UE 10A on the path T1009 (illustrated in Fig. 10(b)) in the Relay communication through the network. That is, Fig. 11(d) illustrates an example of an IP packet which is received from the Relay UE 10A by the UE 10C on the path T1009 in the Relay communication through the network.

The IP packet in Fig. 11(d) is constituted by an outer IP header P1109, an IP header P1100, and a payload (PL) P1101. The outer IP header P1109 indicates that the IP packet is information from the Relay UE 10A to the UE 10C. The IP header P1100 indicates that the IP packet is a packet transmitted from the UE 10B to the UE 10C. Here, the remaining obtained by removing the outer IP header P1109 is the same as that in Fig. 11(a).

### (e) UE 10C → (T1011) → UE 10A

Fig. 11(e) illustrates an example of an IP packet which is transmitted to the Relay UE 10A by the UE 10C on the path T1011 (illustrated in Fig. 10(b)) in the Relay communication through the network. That is, Fig. 11(e) illustrates an example of a packet which is received from the UE 10C by the Relay UE 10A on the path T1011 in the Relay communication through the network.

The IP packet illustrated in Fig. 11(e) is an IP packet in which an outer IP header P1111 is added to the leading of the IP packet illustrated in Fig. 11(b). The outer IP header P1111 indicates that the IP packet is information transmitted from the UE 10C to the Relay UE 10A in the Relay communication through the network.

### (f) UE 10A → (T1013) → UE 10B

Fig. 11(f) illustrates an example of an IP packet which is transmitted to the UE 10B by the UE 10A on the path T1013 (illustrated in Fig. 10(b)) in the direct communication. That is, Fig. 11(f) illustrates an example of a packet which is received from the Relay UE 10A by the UE 10B on the path T1013 in the direct communication.

The Relay UE 10A which has received the packet in Fig. 11(e) from the UE 10C outputs the packet in Fig. 11(f). The packet in Fig. 11(f) is constituted by an outer IP header P1113 and a part obtained by removing the outer IP header P1111 in Fig. 11(e) (which is the same as that in Fig. 11(b)). The outer IP header P1113 indicates that the direct communication from the Relay UE 10A to the UE 10B is used.

In the example of Fig. 11, the packet output from the UE 10B is changed from the packet in Fig. 11(a) to the packet in Fig. 11(c). That is, regarding a transmission signal from the UE 10B to the UE 10C, the outer IP header P1107 is added, and thus routing information may be updated from the infrastructure communication to the UE-to-Network Relay communication through the direct communication.

Similarly, the packet output from the UE 10C is changed from the packet in Fig. 11(b) to the packet in Fig. 11(e). That is, regarding a transmission signal from the UE 10C to the UE 10B, the outer IP header P1111 is added, and thus routing information may be updated from the infrastructure communication to the UE-to-Network Relay communication through the direct communication.

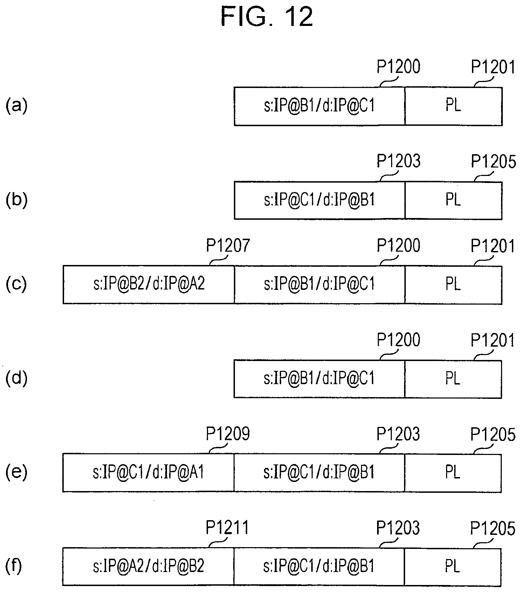

### (2) Regarding Fig. 12

Fig. 12 illustrates an IP packet including specific user data which is transmitted and received by each of the UEs (Relay UE 10A, UE 10B, and UE 10C) on each of the paths illustrated in Fig. 10.

### (a) UE 10B → (T1003) → UE 10C

Fig. 12(a) illustrates an example of an IP packet which is transmitted to the UE 10C by the UE 10B on the path T1003 (illustrated in Fig. 10(a)) in the infrastructure communication. That is, Fig. 12(a) illustrates an example of an IP packet which is received from the UE 10B by the UE 10C on the path T1003 in the infrastructure communication. The IP packet in Fig. 12(a) is constituted by an IP header P1200 and a payload P1201. The IP header P1200 indicates that the IP packet is information from the UE 10B to the UE 10C.

### (b) UE 10C → (T1005) → UE 10B

Fig. 12(b) illustrates an example of an IP packet which is transmitted to the UE 10B by the UE 10C on the path T1005 (illustrated in Fig. 10(a)) in the infrastructure communication. That is, Fig. 12(b) illustrates an example of an IP packet which is received from the UE 10C by the UE 10B on the path T1005 in the infrastructure communication. The IP packet in Fig. 12(b) is constituted by an IP header P1203 and a payload P1205. The IP header P1203 indicates that the IP packet is information from the UE 10C to the UE 10B.

### (c) UE 10B → (T1007) → UE 10A

Fig. 12(c) illustrates an example of an IP packet which is transmitted to the Relay UE 10A by the UE 10B on the path T1007 (illustrated in Fig. 10(b)) in the direct communication. That is, Fig. 12(c) illustrates an example of an IP packet which is received from the UE 10B by the Relay UE 10A on the path T1007 in the direct communication. The IP packet in Fig. 12(c) is constituted by an outer IP header P1207, an IP header P1200, and a payload P1201. The outer IP header P1207 indicates that the IP packet is information from the UE 10B to the Relay UE 10A. The IP header P1200 indicates that the IP packet is a packet transmitted from the UE 10B to the UE 10C.

That is, the IP packet illustrated in Fig. 12(c) is an IP packet in which the outer IP header P1207 is added to the leading of an IP packet which is transmitted to the UE 10C by the UE 10B as illustrated in Fig. 12(a).

### (d) UE 10A → (T1009) → UE 10C

Fig. 12(d) illustrates an example of an IP packet which is transmitted to the UE 10C by the Relay UE 10A on the path T1009 (illustrated in Fig. 10(b)) in the Relay communication through the network. That is, Fig. 12(d) illustrates an example of an IP packet which is received from the Relay UE 10A by the UE 10C on the path T1009 in the Relay communication through the network. The packet in Fig. 12(d) is constituted by a part which is obtained by removing the outer IP from the packet in Fig. 12(c) (and is the same as that in Fig. 12(a)).

### (e) UE 10C → (T1011) → UE 10A

Fig. 12(e) illustrates an example of an IP packet which is transmitted to the Relay UE 10A by the UE 10C on the path T1011 (illustrated in Fig. 10(b)) in the Relay communication through the network. That is, Fig. 12(e) illustrates an example of a packet which is received from the UE 10C by the Relay UE 10A on the path T1011 in the Relay communication through the network.

The IP packet illustrated in Fig. 12(e) is an IP packet in which an outer IP header P1209 is added to the leading of the IP packet illustrated in Fig. 12(b). The outer IP header P1209 indicates that the IP packet is information transmitted from the UE 10C to the Relay UE 10A in the Relay communication through the network.

### (f) UE 10A (T1013 ) → UE 10B

Fig. 12(f) illustrates an example of an IP packet which is transmitted to the UE 10B by the UE 10A on the path T1013 (illustrated in Fig. 10(b)) in the direct communication. That is, Fig. 12(f) illustrates an example of a packet which is received from the Relay UE 10A by the UE 10B on the path T1013 in the direct communication.

The Relay UE 10A which has received the packet in Fig. 12(e) from the UE 10B outputs the packet in Fig. 12(f). The packet in Fig. 12(f) is constituted by an outer IP header P1211 and a part obtained by removing the outer IP header P1209 in Fig. 12(e) (which is the same as that in Fig. 12(b)). The outer IP header P1211 indicates that the direct communication from the Relay UE 10A to the UE 10B is used.

In the example of Fig. 12, the packet output from the UE 10B is changed from the packet in Fig. 12(a) to the packet in Fig. 12(c). That is, regarding a transmission signal from the UE 10B to the UE 10C, the outer IP header P1207 is added, and thus routing information may be updated from the infrastructure communication to the UE-to-Network Relay communication through the direct communication.

Similarly, the packet output from the UE 10C is changed from the packet in Fig. 12(b) to the packet in Fig. 12(e). That is, regarding a transmission signal from the UE 10C to the UE 10B, the outer IP header P1209 is added, and thus routing information may be updated from the infrastructure communication to the UE-to-Network Relay communication which passes through the direct communication.

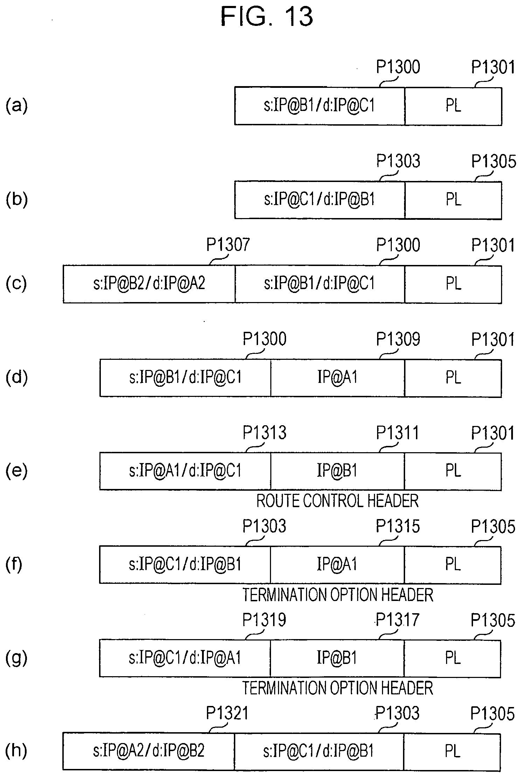

### (3) Regarding Fig. 13

Fig. 13 illustrates an IP packet including specific user data which is transmitted, received, and processed by each of the UEs (Relay UE 10A, UE 10B, and UE 10C) on each of the paths illustrated in Fig. 10.

### (a) UE 10B → (T1003) → UE 10C

Fig. 13(a) illustrates an example of an IP packet which is transmitted to the UE 10C by the UE 10B on the path T1003 (illustrated in Fig. 10(a)) in the infrastructure communication. That is, Fig. 13(a) illustrates an example of an IP packet which is received from the UE 10B by the UE 10C on the path T1003 in the infrastructure communication. The IP packet in Fig. 13(a) is constituted by an IP header P1300 and a payload P1301. The IP header P1300 indicates that the IP packet is information from the UE 10B to the UE 10C. The IP header P1300 and the payload P1301 are the same as the IP header P1100 and the payload P1101 in Fig. 11.

### (b) UE 10C → (T1005) → UE 10B

Fig. 13(b) illustrates an example of an IP packet which is transmitted to the UE 10B by the UE 10C on the path T1005 (illustrated in Fig. 10(a)) in the infrastructure communication. That is, Fig. 13(b) illustrates an example of an IP packet which is received from the UE 10C by the UE 10B on the path T1005 in the infrastructure communication. The IP packet in Fig. 13(b) is constituted by an IP header P1303 and a payload P1305. The IP header P1303 indicates that the IP packet is information from the UE 10C to the UE 10B. The IP header P1303 and the payload P1305 are the same as the IP header P1103 and the payload P1105 in Fig. 11.

### (c) UE 10B → (T1007) → UE 10A

Fig. 13(c) illustrates an example of an IP packet which is transmitted to the Relay UE 10A by the UE 10B on the path T1007 (illustrated in Fig. 10(b)) in the direct communication. That is, Fig. 13(c) illustrates an example of an IP packet which is received from the UE 10B by the Relay UE 10A on the path T1007 in the direct communication. The IP packet in Fig. 13(c) is constituted by an outer IP header P1307, an IP header P1300, and a payload P1301. The outer IP header P1307 indicates that the IP packet is for the direct communication from the UE 10B to the Relay UE 10A. The IP header P1300 indicates that the IP packet is a packet transmitted from the UE 10B to the UE 10C. That is, the IP packet in Fig. 13(c) is a packet obtained by adding the outer IP header P1307 to the leading of the packet in Fig. 13 (a) .

### (d) UE 10A

Fig. 13(d) illustrates a packet created in the Relay UE 10A, in a case where the Relay UE 10A receives the packet in Fig. 13(c) from the UE 10B. In Fig. 13(d), the outer IP header P1307 is removed from the packet in Fig. 13(c), and a routing control header P1309 is added between the IP header P1300 and the payload P1301. The routing control header P1309 is used for designating a Relay UE which is used in the Relay communication.

### (e) UE 10A → (T1009) → UE 10C

Fig. 13(e) illustrates an example of an IP packet which is transmitted to the UE 10C by the Relay UE 10A on the path T1009 (illustrated in Fig. 10(b)) in the Relay communication which passes through the network. That is, Fig. 13(e) illustrates an example of an IP packet which is received from the Relay UE 10A by the UE 10C on the path T1009 in the Relay communication which passes through the network.

Here, the Relay UE 10A converts the packet in Fig. 13(d) to the packet in Fig. 13(e) just before transmission. The packet in Fig. 13(e) is constituted by an IP header P1313, a routing control header P1311, and a payload P1301. The IP header P1313 indicates that the packet in Fig. 13(e) is a packet from the Relay UE 10A to the UE 10C. The routing control header P1311 indicates that the actual transmission source is the UE 10B. After the Relay UE 10A converts the packet in Fig. 13(d) to the packet in Fig. 13(e), the Relay UE 10A transmits the IP packet illustrated in Fig. 13(e) to the UE 10C.

### (f) UE 10C

A packet in Fig. 13(f) is a packet generated in the UE 10C when transmission from the UE 10C to the UE 10B is switched from the infrastructure communication to the UE-to-Network Relay communication. The packet in Fig. 13(f) is constituted by an IP header P1303, a termination option header P1315, and a payload P1305. The IP header P1303 indicates that the packet is information from the UE 10C to the UE 10B. The packet in Fig. 13(f) is obtained by interposing the termination option header P1315 between the IP header P1303 and the payload P1305 in Fig. 13(b). The termination option header P1315 is a header for indicating that the packet is a termination entity. However, here, instead of the termination option header P1315, the IP address of the UE 10A which is the Relay UE is included.

### (g) UE 10C → (T1011) → UE 10A

Fig. 13(g) illustrates an example of an IP packet which is transmitted to the Relay UE 10A by the UE 10C on the path T1011 (illustrated in Fig. 10(b)) in the Relay communication which passes through the network. That is, Fig. 13(g) illustrates an example of a packet which is received from the UE 10C by the Relay UE 10A on the path T1011 in the Relay communication which passes through the network.

Here, the UE 10C converts the IP packet illustrated in Fig. 13(f) to the IP packet illustrated in Fig. 13(g) just before transmission. The packet in Fig. 13(g) is an example of an IP packet including specific user data of the path T1011 in Fig. 10(b). The packet in Fig. 13(g) is constituted by an IP header P1319, a termination option header P1317, and a payload P1305. The IP header P1319 indicates that the packet in Fig. 13(g) is information from the UE 10C to the Relay UE 10A.

### (h) UE 10A → (T1013) → UE 10B

Fig. 13(h) illustrates an example of an IP packet which is transmitted to the UE 10B by the UE 10A on the path T1013 (illustrated in Fig. 10(b)) in the direct communication. That is, Fig. 13(h) illustrates an example of a packet which is received from the Relay UE 10A by the UE 10B on the path T1013 in the direct communication.

Here, the packet in Fig. 13(h) is an example of an IP packet including specific user data in Fig. 10(b). The Relay UE 10A which has received the packet in Fig. 13(g) from the UE 10C outputs the packet in Fig. 13(h). The packet in Fig. 13(h) is constituted by an outer IP header P1321, an IP header P1303, and a payload P1305. The outer IP header P1321 indicates that the direct communication from the UE 10A to the UE 10B is used. The IP header P1303 indicates that the packet in Fig. 13(h) is information from the UE 10C to the UE 10B.

### [1.4 Processing Example]

Processing in the embodiment will be described below with reference to the drawings. Sequence diagrams, and operation flows described in this embodiment are just an example. Even when an order of processes and the like is reversed in a range which does not influence an operation, the reverse of the order does not influence realization of the present invention.

### [1.4.1 ProSe Registration]

In the embodiment, in order to cause the ProSe server 20 to authenticate a service for each UE, it is necessary that the ProSe server 20 registers and manages each of the UEs (Relay UE 10A, UE 10B, and UE 10C) as a UE having a ProSe function. When each of the UEs 10 (Relay UE 10A, UE 10B, and UE 10C) is registered in the ProSe server 20, it is necessary that the core network 9 assigns a ProSe ID to each of the UEs 10. The ProSe ID herein may be authentication information indicating that the ProSe server 20 completes to authenticate the UE.

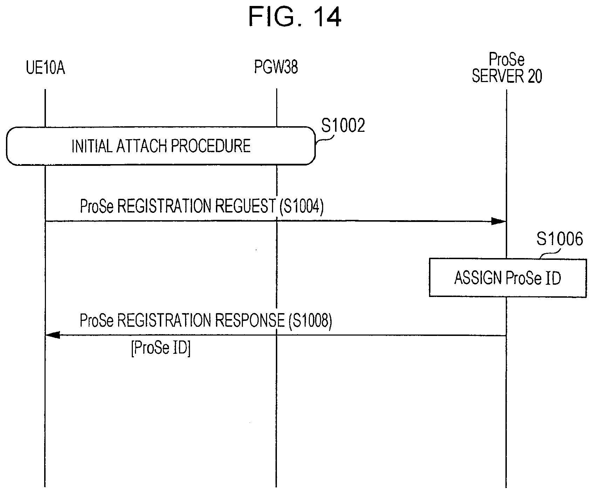

Fig. 14 illustrates an example of processes until the UE 10A is registered as a ProSe UE in the ProSe server 20, and the UE 10A acquires the ProSe ID from the ProSe server 20. A procedure in which the UE 10B and the UE 10C are registered as ProSe UEs in the ProSe server 20, and respectively acquire ProSe IDs from the ProSe server 20 is the same as that for the UE 10A. Thus, descriptions thereof will be omitted.

The UE 10A performs an initial attach procedure (S1002). More specifically, the UE 10A transmits an attach request message to the MME 44 so as to start an attach procedure. The UE 10A establishes a PDN connection between the UE 10A and the PGW 38 selected by the MME 44, based on the attach request message. The PDN connection is a communication channel used in the infrastructure communication. The UE 10A acquires an IP address used in the infrastructure communication, from the core network 9. In other words, the core network 9 assigns an IP address to the UE 10A based on the attach request message transmitted by the UE 10A.

After the initial procedure in S1002 is completed, the UE 10A transmits a registration request as a ProSe UE to the ProSe server 20 (S1004). If the ProSe server 20 receives the ProSe registration request from the UE 10A, the ProSe server 20 assigns a ProSe ID to the UE 10A (S1006).

The ProSe server 20 transmits a ProSe registration response to the UE 10A with including the ProSe ID (ProSe ID A) which has been assigned to the UE 10A (S1008).

The UE 10A receives the ProSe registration response from the ProSe server 20, and acquires the ProSe ID (ProSe ID A) which has been assigned to the UE 10A. After the UE 10A acquires the ProSe ID, the UE 10A may store the acquired ProSe ID in the ProSe ID management table 332 of the storage unit 330.

Here, the registration request transmitted to the ProSe server 20 by the UE 10A may be used for requiring authentication of receiving a service associated with the ProSe. The ProSe server 20 may confirm that the service can be provided for the UE 10A, and may notify the UE 10A of being authenticated, by transmitting the ProSe registration response.

The ProSe server 20 may authenticate a service, and then assign a ProSe ID. The UE 10A and the ProSe server 20 may use the ProSe ID as authentication information indicating that the service is authenticated.

### [1.4.2 First Processing Example]

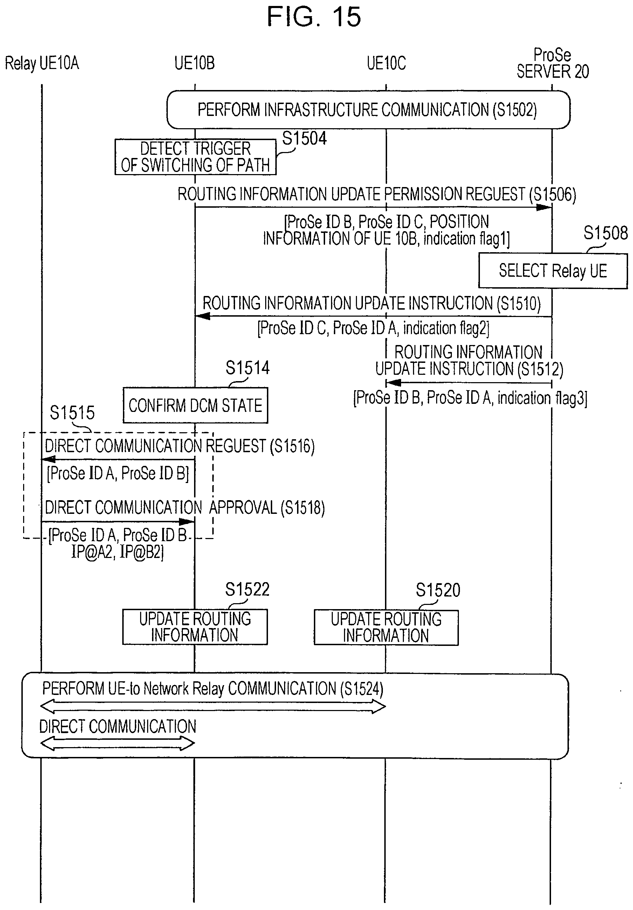

Fig. 15 is a diagram illustrating a service continuing procedure. Fig. 15 illustrates processing in which the UE 10B detects a trigger, and thus a path or a communication channel of a communication between the UE 10B and the UE 10C is switched from that of the infrastructure communication T905 to that of the UE-to-Network Relay communication which passes through the direct communication T901 and the Relay communication T903. In the embodiment, descriptions will be made by using only components which are used for describing the processing. For example, descriptions for other devices (PGW and the like) will be omitted.

In the embodiment, in a case where an instruction or a request of an operation for the communication counterpart wishes to be performed between the functions, a case where a flag referred to as an indication flag is added will be described. However, information indicating that a request is provided is not limited to a method for performing identification by using the flag. For example, a routing-information update request message is defined, and the defined routing-information update request message is transmitted, and thus the request may be performed. More specifically, equipment which performs a request or an instruction may transmit a request message which includes a message type for requiring update of routing information, to a request counterpart.

In processing illustrated in Fig. 15, the "indication flag" is used so as to have the following meaning.

Indication flag1: information element which is included in a signal which is transmitted to the ProSe server 20 from the UE 10B, and indicates an instruction or a request.

Indication flag2: information element which is included in a signal which is transmitted to the UE 10B from the ProSe server 20, and indicates an instruction or a request.

Indication flag3: information element which is included in a signal which is transmitted to the UE 10C from the ProSe server 20, and indicates an instruction or a request.

Here, the "indication flag1" may be a flag indicating that permission of switching is required. The switching means that a communication between UEs which are designated is switched from a communication channel of the infrastructure communication T905 to a communication channel of the UE-to-Network Relay communication, or is switched from the communication channel of the UE-to-Network Relay communication to the infrastructure communication T905.

That is, the UE 10B transmits information including the "indication flag1", to the ProSe server 20, and thus the UE 10B may require the ProSe server 20 to permit switching of a communication channel between the UE 10B and the UE 10C from the infrastructure communication T905 to the UE-to-Network Relay communication.

The "indication flag1" may be a flag indicating that a UE designated from the communication channel of the infrastructure communication T905 is used as a Relay UE, and that permission of switching of a communication between designated UEs, to a communication channel of the UE-to-Network Relay communication is required.

That is, the UE 10B transmits a routing information update request including the "indication flag1", to the ProSe server 20, and thus the UE 10B may require the ProSe server 20 to permit switching of a communication channel between the UE 10B and the UE 10C from the infrastructure communication T905 to the UE-to-Network Relay communication which passes through the Relay UE 10A.

The "indication flag1" may be a flag indicating that an instruction of selection of a Relay UE to be connected is performed. That is, the UE 10B transmits information including the "indication flag1", to the ProSe server 20, and thus the UE 10B may require the ProSe server 20 to select a Relay UE to which the UE 10B is connected.

The "indication flag1" may be a flag indicating that an instruction of the followings is performed: a Relay UE to be connected is selected, and another UE such as a transmission source UE of the "indication flag1" or a communication counterpart of the transmission source UE is notified of the selected Relay UE. That is, information including the "indication flag1" is transmitted to the ProSe server 20, and thus the UE 10B may require the ProSe server 20 to select a Relay UE to which the UE 10B is connected, and to notify another UE such as the UE 10B or the UE 10C of the selected Relay UE.

The "indication flag1" may be a flag indicating that another UE such as a transmission source UE or a communication counterpart of the transmission source UE is instructed of selection of a Relay UE to be connected and establishment of a communication channel to the selected Relay UE. For example, the UE 10B transmits information including the "indication flag1" to the ProSe server 20, and thus the UE 10B may require the ProSe server 20 to select a Relay UE to which the UE 10B is connected, and to instruct another UE such as the UE 10B or the UE 10C to establish the communication channel of the direct communication toward the Relay UE.

The "indication flag1" may indicate implication obtained by combining the request or the instruction which is described until now.

The "indication flag2" may be a flag indicating that switching from the infrastructure communication T905 to the UE-to-Network Relay communication which passes through the Relay UE 10A is required.

That is, the ProSe server 20 transmits a routing information update instruction including the "Indication flag2", to the UE 10B, and thus the ProSe server 20 may require the UE 10B to update routing information so as to switch communication with the UE 10C from the infrastructure communication T905 to the UE-to-Network Relay communication which passes through the direct communication with the Relay UE 10A. In addition, the ProSe server 20 may require the UE 10B to update routing information to the UE-to-Network Relay communication which passes through the infrastructure communication with the Relay UE 10A.

The "Indication flag2" may be a flag indicating a request of confirming a DCM state along with the Relay UE. That is, the ProSe server 20 transmits a routing information update instruction which includes the "indication flag2" and the identifier (ProSe ID A) of the Relay UE 10A, to the UE 10B, and thus the ProSe server 20 may require the UE 10B to confirm a direct connection management (DCM) state between the UE 10B and the Relay UE 10A.

The "Indication flag2" may be a flag which is used for an instruction of establishing a communication channel in a case where the DCM state along with the Relay UE is confirmed, as a result, the DCM state indicates an idle mode. As a result, in a case where the DCM state indicates a connected mode, the "Indication flag2" may be a flag indicating that processing is not particularly required. For example, the ProSe server 20 transmits a routing information update instruction including the "indication flag2", to the UE 10B, and thus the ProSe server 20 may require the UE 10B to confirm the DCM state along with the Relay UE 10A, and to establish a direct communication channel with the Relay UE 10A in a case where the DCM state is an idle state.

Here, as the DCM state, the idle mode and the connected mode which are connection states of a direct communication channel between UEs are provided. The idle mode is a state where a direct connection by non-access-stratum (NAS) signaling is not established between UEs. The connected mode is a state where the NAS signaling connection is established.

The "indication flag2" may indicate implication obtained by combining the request or the instruction which is described until now.

The "indication flag3" may be a flag indicating that the following is required: switching from the infrastructure communication T905 to the UE-to-Network Relay communication which passes through the Relay UE 10A, or switching from the UE-to-Network Relay communication to the infrastructure communication T905.

That is, the ProSe server 20 transmits a routing information update instruction including the "indication flag3", to the UE 10C, and thus the ProSe server 20 may require the UE 10B to update routing information so as to switch a communication with the UE 10C from the infrastructure communication T905 to the UE-to-Network Relay communication which passes through the direct communication with the Relay UE 10A. The ProSe server 20 may require update of routing information to the UE-to-Network Relay communication which passes through the infrastructure communication with the Relay UE 10A.

In the example illustrated in Fig. 15, the "indication flag1" is set as a flag indicating a request of switching a path or a communication channel, a request of selecting a Relay UE to be connected to the UE 10B, a request of notifying the UE 10B and the UE 10C of the Relay UE, and a request of instructing the UE 10B to establish a communication channel to the Relay UE.

The "indication flag2" in Fig. 15 is set as a flag indicating a request of confirming a DCM state by the UE 10B, a request of establishing a communication channel of the direct communication channel in a case where, as a result of confirming the DCM state, the DCM state is an idle mode, a request of an instruction of updating the routing information from the infrastructure communication T905 to the UE-to-Network Relay communication which passes through the direct communication T901 with the Relay UE 10A.

The "indication flag3" in Fig. 15 is set as a flag indicating a request of an instruction of updating routing information so as to switch a communication between the UE 10C and the UE 10B from the infrastructure communication T905 to the UE-to-Network Relay communication which passes through the Relay communication T903 with the Relay UE 10A, by the UE 10C.

In the initial state of Fig. 15, the UE 10B and the UE 10C perform transmission and reception of data in the infrastructure communication T905 as illustrated in Fig. 10(a) (S1502). At this time, the UE 10B and the UE 10C are in coverage of the network access. The coverage of the network access means being in an area constituted by the base station eNB 52 of LTE.

In the infrastructure communication between UEs in S1502, for example, packets illustrated in Figs. 11(a) and 11(b) are transmitted and received.

The UE 10B detects a trigger of switching a path (S1504). The trigger of switching a path to the UE-to-Network Relay communication is not particularly limited.
For example, the UE 10B may detect that the UE 10B is out of coverage of the network.

The trigger is detected in S1504, and then the UE 10B transmits a routing-information update permission request to the ProSe server 20 (S1506). The routing-information update permission request in S1506 may include a "ProSe ID B" for identifying the UE 10B, and may include a "ProSe ID C" for identifying the UE 10C which is set as a communication counterpart. The routing-information update permission request may include "position information of the UE 10B", may include the "indication flag1", and may include a plurality of information elements as described above.

If the ProSe server 20 receives the routing-information update permission request from the UE 10B, reception of the routing-information update permission request including the position information of the UE 10B by the ProSe server 20 causes the ProSe server 20 to update the UE position information management table 226 for the UE 10B, which is managed by the ProSe server 20.

In a case where the ProSe server 20 receives the routing-information update permission request including the "indication flag1", or in a case where the ProSe server 20 receives a message including the request, the ProSe server 20 may verify that the UE 10B switches a communication from the infrastructure communication T905 to the UE-to-Network Relay communication, based on the "indication flag1" or based on the request.

In a case where the "indication flag1" is not included in the routing-information update permission request of S1506, the ProSe server 20 does not have a need for particularly performing processing.

In a case where the ProSe server 20 receives the routing-information update permission request including the "indication flag1", or in a case where the ProSe server 20 receives a message including the request, the ProSe server 20 selects a Relay UE to which the UE 10B is to be connected, based on the "indication flag1" or based on the request (S1508). The selection method for the Relay UE 10A is not particularly limited. For example, a UE in the vicinity of the UE 10B may be selected based on position information of each UE, which is stored in the UE position information management table 226 of the storage unit 220 in the ProSe server 20.

The ProSe server 20 transmits a routing information update instruction for a notification of the selected Relay UE, to the UE 10B based on the process of S1508 or S1506 (S1510). In a case where selection of a Relay UE is not possible in S1508, processes subsequent to the process of S1510 are not performed.

The routing information update instruction transmitted in S1510 may include the ProSe ID A of the Relay UE 10A which has been selected as the Relay UE, and may include the ProSe ID C of the UE 10C set as a transmission counterpart destination which updates routing information. The routing information update instruction may include the "indication flag2", and may include a plurality of information elements as described above.

In a case where the ProSe server 20 receives the routing-information update permission request including the "indication flag1", or in a case where the ProSe server 20 selects a Relay UE (S1508), or in a case where the ProSe server 20 transmits the routing information update instruction (S1510), the ProSe server 20 transmits the routing information update instruction to the UE 10C (S1512).

The routing information update instruction of S1512 may be transmitted simultaneously with the process of S1506, or may be transmitted at any timing for processes after the process of S1506. In the embodiment, it is assumed that waiting is performed until a timing having a probability of receiving a refusal response after the process of S1506.

The routing information update instruction of S1512 may include the ProSe ID B of the UE 10B, or may include the ProSe ID A of the Relay UE 10A which has been selected as the Relay UE. The routing information update instruction may include the "indication flag3", or may include a plurality of information elements as described above.

The UE 10B receives the routing information update instruction from the ProSe server 20 (S1510). In a case where the "indication flag2" is included in the routing information update instruction which has been received from the ProSe server 20 by the UE 10B, or in a case where the message including the request is received, the UE 10B confirms a direct connection management (DCM) state between the UE 10B and the UE 10A, based on the "indication flag2" or based on the request (S1514).

The UE 10B confirms the DCM state between the UE 10B and the UE 10A, and performs processing (S1515) in a case of the idle mode. The state between the UE 10B and the UE 10A is the idle mode, and thus the UE 10B can refuse the direct communication with the UE 10A. In this case, the UE 10B transmits a refusal signal to the ProSe server 20. The process of S1515 is constituted by the processes of S1516 and S1518.

In a case where the UE 10B determines that the DCM state between the UE 10B and the UE 10A is the idle mode in S1514, firstly, the UE 10B transmits a direct communication request to the UE 10A (S1516).

The Relay UE 10A receives the direct communication request from the UE 10B, and transmits a direct communication approval to the UE 10B (S1518).

In S1518, an outer IP address (IP@A2, IP@B2) which is assigned to each of UEs (UE 10A and UE 10B) by the Relay UE 10A may be included. Identifiers ProSe IDs (ProSe ID A and ProSe ID B) of the UE 10A and the UE 10B may be included, and a plurality of outer IP addresses or identifiers may be included.

The outer IP addresses (IP@A2 and IP@B2) of the UE 10A and the UE 10B are used when each of the UEs (UE 10A and UE 10B) encapsulates an IP packet in order to cause the UE 10A and the UE 10B to perform the direct communication.

The UE 10B confirms the DCM state between the UE 10A and the UE 10B (S1514). The UE 10B updates the routing information table 142 of the UE 10B, based on the DCM state or based on reception of the direct communication approval (S1518) from the Relay UE 10A by the UE 10B (S1522). The routing information table 142 is updated, and thus a signal output from the UE 10B is switched from the packet in Fig. 11(a) to the packet in Fig. 11(c), or is switched from the packet in Fig. 13(a) to the packet in Fig. 13(c).

If the UE 10C receives the routing information update instruction from the ProSe server 20 (S1512), the UE 10C updates the routing information table 142 of the UE 10C (S1520). The routing information table 142 is updated, and thus a signal output from the UE 10C is switched from the packet in Fig. 11(b) to the packet in Fig. 11(e) or the packet in Fig. 13(b) to the packet in Fig. 13(g).

As described above, the communication between the UE 10B and the UE 10C can be switched from the infrastructure communication to the UE-to-Network Relay communication which passes through the UE 10A (S1524).

### [1.4.3 Second Processing Example]

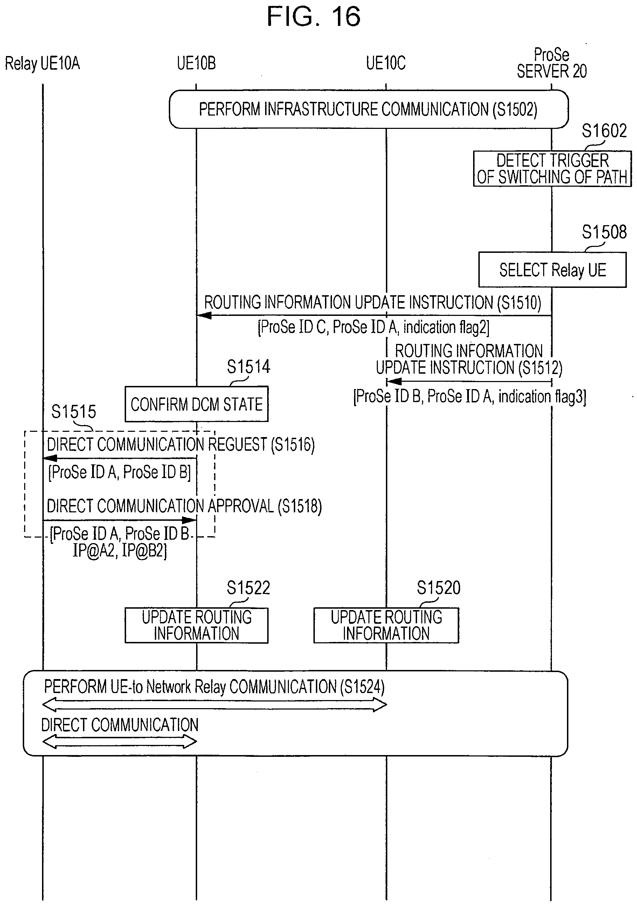

Next, a second processing example as a processing example which is different from the first processing example in Fig. 15 will be described. A case where a trigger for requiring switching from the infrastructure communication to the UE-to-Network Relay communication is detected by the ProSe server 20, not the UE 10B, and the ProSe server leads to perform switching processing of a communication channel will be described with reference to Fig. 16.

The functions of the "indication flags 2 to 3" in Fig. 16 are similar to those in Fig. 15, and thus descriptions thereof will be omitted. Regarding a flow of processing, a part which is the same as that in Fig. 15 is denoted by the same reference sign, and descriptions thereof will be omitted.

In Fig. 16, as an initial state, the UE 10B and the UE 10C perform the infrastructure communication (S1502). Here, packets in Figs. 11(a) and 11(b) are transmitted and received.

The ProSe server 20 detects a trigger for requiring switching a path or a communication channel from the infrastructure communication T905 (S1602). Any trigger may be used in the process of S1602. For example, the ProSe server 20 may detect that the UE 10B is out of the coverage of the network access.

Detection of the trigger in S1602 causes the ProSe server 20 to select a Relay UE which is optimum for the UE 10B (S1508). The selection method for the Relay UE is not particularly limited. For example, selection based on position information of a UE registered in the Proe server is considered. Processes subsequent to the process of S1508 are similar to those subsequent to the process of S1508 in Fig. 15.

### [1.5 Operation Flow of Device]

### [1.5.1 Operation Flow of UE 10B]

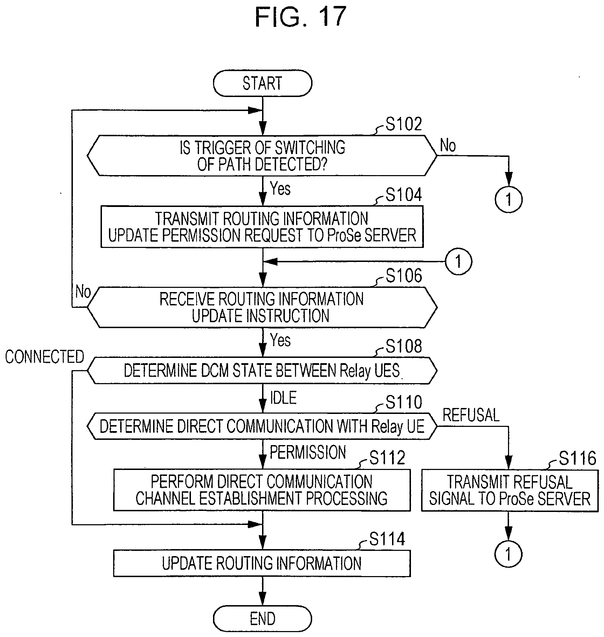

Fig. 17 illustrates an example of a flowchart diagram of the UE 10B, which realizes sequences in Figs. 15 and 16. The UE 10B waits for detection of a certain trigger for switching from the infrastructure communication to the UE-to-Network Relay communication (Step S102). In a case where a switching trigger for a path is detected in Step S102 (Step S102; Yes), the UE 10B transmits a routing-information update permission request (including the flag1) to the ProSe server 20 (Step S104).

After the process of Step S104 is performed, or in a case where the switching trigger for a path is not detected in Step S102 (Step S102; No), the UE 10B waits for reception of a routing information update instruction (including the flag2) from the ProSe server 20 (Step S106). In a case where reception of the routing information update instruction in Step S106 is not possible (Step S106; No), the UE 10B determines that the switching of a path is not permitted to the ProSe server 20, and the process returns to Step S102.

In a case where the UE 10B receives the routing information update instruction from the ProSe server 20 in Step S106 (Step S106; Yes), the UE 10B determines a DCM state between the UE 10B and the designated UE 10A (Step S108). In a case where the DCM state with the UE 10A is the idle mode (Step S108; idle), the UE 10B determines whether the direct communication with the Relay UE 10A is realized (Step S110).

In a case where the UE 10B is permitted to perform the direct communication in Step S110 (Step S110; permission), the UE 10B establishes a communication channel of the direct communication between the UE 10A and the UE 10B (Step S112).

In a case where the UE 10B is refused to perform the direct communication in Step S110 (Step S110; refusal), the UE 10B transmits a refusal signal to the ProSe server 20 (Step S116). Then, the process returns to Step S106, and processing is performed.

After the process of Step S112 is completed, or in a case where a DCM state between the UE 10B and the Relay UE 10A is a connected mode in Step S108 (Step S108; connected), the UE 10B updates routing information so as to switch a communication channel from the infrastructure communication T905 to the UE-to-Network Relay communication which passes through the direct communication T901 with the Relay UE 10A (Step S114).

### [1.5.2 Operation Flow of Relay UE 10A]

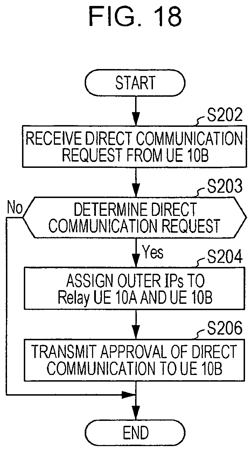

Fig. 18 illustrates an example of a flowchart diagram of the Relay UE 10A, which realizes the sequences in Figs. 15 and 16. The Relay UE 10A receives a direct communication request from the UE 10B (Step S202). The Relay UE 10A determines whether a request from the UE 10B is permitted, based on the process of Step S202 (Step S203). In a case where an establishment request of a communication channel is permitted in Step S203 (Step S203; Yes), the Relay UE 10A assigns outer IPs to the Relay UE 10A and the UE 10B (Step S204).

In a case where the UE 10A refuses the direct communication request from the UE 10B in Step S203 (Step S203; No), the UE 10A ends the processing. In a case where the process of Step S203 is determined to be No, a message which means a notification of refusal may be transmitted to the UE 10B, and the processing may be ended. After the process of Step S204, the Relay UE 10A transmits a direct communication approval to the UE 10B (Step S206).

Here, determination of whether the Relay UE 10A permits the request from the UE 10B may be performed based on whether or not service verification is completed by ProSe Registration. For example, the determination may be performed based on authentication information such as a ProSe ID, which is transmitted by the UE 10B. In addition, the determination may be performed based on whether or not the authentication information is provided. The determination may be performed based on a state of a resource in the network or a situation of congestion, a configuration by a user, and the terminal policy generated from various factors.

### [1.5.3 Operation Flow of ProSe Server 20]

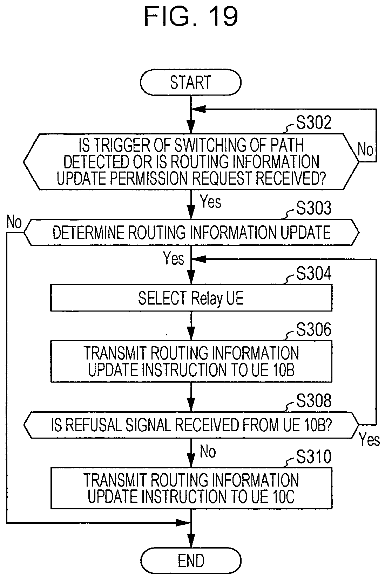

Next, Fig. 19 illustrates an example of a flowchart diagram of the ProSe server 20, which realizes the sequences in Figs. 15 and 16. The ProSe server 20 waits for detection of the switching trigger for a path, or waits for reception of the routing-information update permission request from the UE which is registered in the ProSe server 20 (Step S302) .

In a case where any of the two types of triggers is detected in Step S302 (Step S302; Yes), the ProSe server 20 determines whether or not the routing information update request is permitted (Step S303).

Here, the determination of whether the ProSe server 20 permits the routing information update request may be performed based on whether or not the UE 10B completes service verification by the ProSe Registration.

For example, the determination may be performed based on the authentication information such as a ProSe ID, which is transmitted by the UE 10B. In addition, the determination may be performed based on whether or not the authentication information is provided. The determination may be performed based on a state of a resource in the network or a situation of congestion, a configuration by a user, and the operator policy generated from various factors.

In a case where update of the routing information is permitted in Step S303 (Step S303; Yes), the ProSe server 20 selects a Relay UE (Step S304). The selection method of the Relay UE is not particularly designated. For example, a UE having a Relay function which has the closest distance is selected.

In a case where the ProSe server 20 refuses routing information update in Step S303 (Step S303; No), the ProSe server 20 ends the processing. In a case where determination of refusal is performed in Step S303 (Step S303; No), a message which means a notification of refusal may be transmitted to a transmission source of the routing information permission request, and the processing may be ended.

Then, the routing information update instruction (including the flag2) is transmitted to the ProSe server 20 (Step S306). The process of Step S306 is completed, and then it is confirmed whether a refusal signal is received from the UE 10B (Step S308).

In a case where the refusal signal is received from the UE 10B (Step S308; Yes), the ProSe server 20 selects a Relay UE again (Step S304).

In a case where the refusal signal is not received from the UE 10B in Step S308 (Step S308; No), the ProSe server 20 transmits a routing information update instruction (including the flag3) to the UE 10C (Step S310).

Hitherto, the operation flow for each of the functions for realizing the sequences illustrated in Figs. 15 and 16 is described.

### [2. Second Embodiment]

A second embodiment will be described. The second embodiment has components which are similar to those of the system in the first embodiment. Thus, descriptions will be made focused on a processing flow and an operation flow which are different from those in the first embodiment.

### [2.1 Processing Example]

### [2.1.1 First Processing Example]

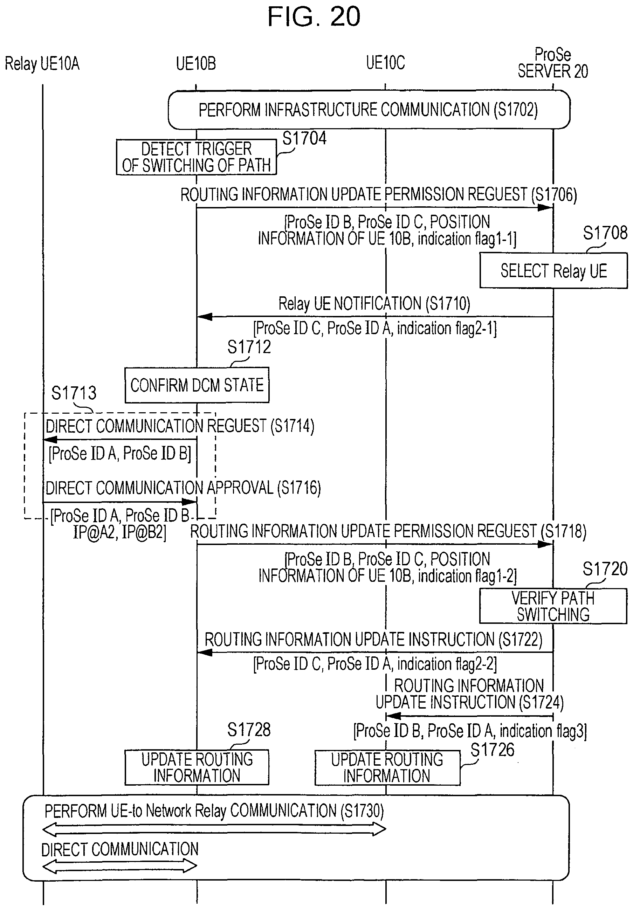

As the second embodiment, a first processing example in a case where an instruction of updating the routing information is transmitted from the ProSe server 20 to the UE 10B and the UE 10C after a communication channel of the direct communication between the UE 10B and the Relay UE 10A is established will be described with reference to Fig. 20.

In Fig. 20, as a flag which is included in a signal transmitted to the ProSe server 20 from the UE 10B and indicates an instruction or a request, an "indication flag1-1" and an "indication flag1-2" are set. As a flag which is included in a signal transmitted to the UE 10B from the ProSe server 20 and indicates an instruction or a request, an "indication flag2-1" and an "indication flag2-2" are set.

As a flag which is included in a signal transmitted to the UE 10C from the ProSe server 20 and indicates an instruction or a request, an "indication flag3" is set similarly to in Figs. 15 and 16.

The "indication flag1-1" and the "indication flag1-2" include a portion of the function of the "indication flag1" in Fig. 15. Specifically, the "indication flag1-1" in Fig. 20 is a flag for requiring the ProSe server 20 to select a Relay UE used in the direct communication for updating the routing information, for requiring a response to the selected Relay UE, and for requiring an instruction of confirming the DCM state.

The "Indication flag1-2" is a flag for requiring the ProSe server 20 to permit routing information update, and for requiring the instruction of confirming the DCM state.

Similarly to the "indication flag1-1" and the "indication flag1-2", the "indication flag2-1" and the "indication flag2-2" include a portion of the function of the "indication flag2" in Figs. 15 and 16.

Specifically, in Fig. 20, the "indication flag2-1" is a flag for notifying the UE 10B of the selected Relay UE, for requiring confirmation of a DCM state with the selected Relay UE, and for requiring a notification of the DCM state being in a conneced mode. The "indication flag2-2" is a flag for requiring the UE 10B to switch the routing information from the infrastructure communication to the UE-to-Network Relay communication which passes through the Relay UE 10A in the direct communication.

Fig. 20 illustrates processing in which the ProSe server 20 establishes a communication channel between the UE 10B and the Relay UE 10A which perform the direct communication, and then verifies switching of a path.

In Fig. 20, firstly, as the initial state, the UE 10B and the UE 10C perform the infrastructure communication (S1702). Here, packets in Figs. 11(a) and 11(b) may be transmitted and received.

Then, the UE 10B detects a trigger of switching of a path (S1704). The trigger of switching of a path in S1704 is not particularly limited. For example, a case where the UE 10B is out of the coverage of the network access is considered. The process of S1704 is similar to the process of S1504 in Fig. 15.

If the UE 10B detects the trigger in S1704, the UE 10B transmits a routing-information update permission request for a notification of switching a path, to the ProSe server 20 (S1706).

The routing-information update permission request in S1706 may include an ID (ProSe ID B) for identifying the UE 10B which is set as a transmission source. The routing-information update permission request may include an identifier (ProSe ID C) of the UE 10C which is a communication counterpart of the current infrastructure communication by the UE 10B, or may include a position information ID of the UE 10B. The routing-information update permission request may include the "indication flag1-1", or may include a plurality of information elements.

In a case where the ProSe server 20 receives the routing-information update permission request from the UE 10B, and the "indication flag1-1" is included, a Relay UE to which the UE 10B is connected is selected based on the "indication flag1-1" or based on the request (S1708). The selection method of the Relay UE is not particularly limited. For example, selection based on position information of a UE registered in the ProSe server is considered. Step S1708 is similar to S1508 in Fig. 15.

The ProSe server 20 transmits a Relay UE notification to the UE 10B based on the "indication flag1-1" or based on the process of S1708 (S1710).

In a case where the ProSe server 20 does not select a Relay UE in S1708, or in a case where the selection is not possible, the ProSe server 20 performs no processing. In addition, the ProSe server 20 may transmit a message for a notification of a failure or refusal in selection of a Relay UE, to the UE 10B which is a transmission source of the routing-information update permission request in S1706.

The Relay UE notification in S1710 may include an identifier (ProSe ID C) of the UE 10C which is a communication counterpart of the UE 10B. The Relay UE notification may include an identifier (ProSe ID A) of the Relay UE 10A which has been selected as a Relay UE. The Relay UE notification may include the "indication flag2-1" or a plurality of information elements.

If the UE 10B receives the Relay UE notification which includes the "indication flag2-1", from the ProSe server 20, the UE 10B confirms a DCM state between the UE 10B and the UE 10A based on the "indication flag2-1" or based on the request (S1712).

In a case where the Relay UE notification received by the UE 10B in S1710 does not include the "indication flag2-1", the UE 10B does not have a need for particularly performing processing. In addition, the routing-information update permission request in S1706 may be transmitted to the ProSe server 20 again.

In a case where the DCM state is the idle mode in S1712, processing included in S1713 is performed.

The process of S1713 is constituted by the processes of S1714 and the S1716. Firstly, the UE 10B transmits a direct communication request to the Relay UE 10A (S1714). In S1714, the identifier (ProSe ID A) of the UE 10A and the identifier (ProSe ID B) of the UE 10B are included.

If the Relay UE 10A receives the direct communication request from the UE 10B, the Relay UE 10A transmits a direct communication approval to the UE 10B (S1716). The direct communication approval in S1716 includes the outer IPs (IP@A2 and IP@B2) which are respectively assigned to the UE 10A and the UE 10B, and the identifiers (ProSe ID A and ProSe ID B) of the Relay UE 10A and the UE 10B, in order to cause the Relay UE 10A to realize the direct communication between the Relay UE 10A and the UE 10B. The UE 10B receives the direct communication approval from the Relay UE 10A.

The UE 10B transmits a routing-information update permission request to the ProSe server 20 based on the received direct communication approval, based on a case where a confirmation result in S1712 corresponds to the connected mode, or based on the request (S1718).

The routing-information update permission request in S1718 may include the identifier (ProSe ID B) of the UE 10B, include the identifier (ProSe ID C) of the UE 10C, or include position information of the UE 10B. The routing-information update permission request may include the "indication flag1-2" or include a plurality of information elements.

In a case where the ProSe server 20 receives the routing-information update permission request including the "indication flagl-2", from the UE 10B, or in a case where the ProSe server 20 receives a message including the request, the ProSe server 20 verifies switching of a path, switching of a communication channel, or selection of a path or a communication channel, based on the "indication flag1-2" or based on the request (S1720).

The ProSe server 20 verifies switching of a path, and then transmits a routing information update instruction to the UE 10B and the UE 10C (S1722, S1724).

In a case where the switching of a path, switching of a communication channel, or selection of a path or a communication channel is refused or fails in S1720, the processing may be ended. A refusal notification of switching verification of a path may be transmitted to the UE 10B which is a transmission source of the routing-information update permission request in S1718.

The routing information update instruction (S1722) transmitted from the ProSe server 20 to the UE 10B may include the identifier (ProSe ID C) of the UE 10C, or include the identifier (ProSe ID A) of the Relay UE 10A selected as a Relay UE. The routing information update instruction may include the "indication flag2-2" or include a plurality of information elements.

The routing information update instruction (S1724) transmitted from the ProSe server 20 to the UE 10C is the same as that in S1512 of Fig. 15, and thus descriptions thereof will be omitted.

After the UE 10B receives the routing information update instruction from the ProSe server 20, or if the UE 10B receives a message including the request, the UE 10B updates the routing information based on the indication flag2-2 or based on the request (S1728). Thus, in a case where information to be transmitted from the UE 10B to the UE 10C is generated, the routing information is updated in a form from Fig. 11(a) to Fig. 11(c) or in a form from Fig. 13(a) to Fig. 13(c).

After the.UE 10C receives the routing information update instruction in S1724, the UE 10C updates the routing information based on the "indication flag3" or based on the request (S1726). Thus, in a case where information to be transmitted from the UE 10C to the UE 10B is generated, the routing information is updated in a form from Fig. 11(b) to Fig. 11(e) or in a form from Fig. 13(b) to Fig. 13(g).

With the above descriptions, while a service is continuously provided, a path can be switched, or a communication channel can be switched from the infrastructure communication between the UE 10B and the UE 10C to the UE-to-Network Relay communication which passes through the UE 10A. In addition, selection of a path or a communication channel can be performed (S1730).

### [2.1.2 Second Processing Example]

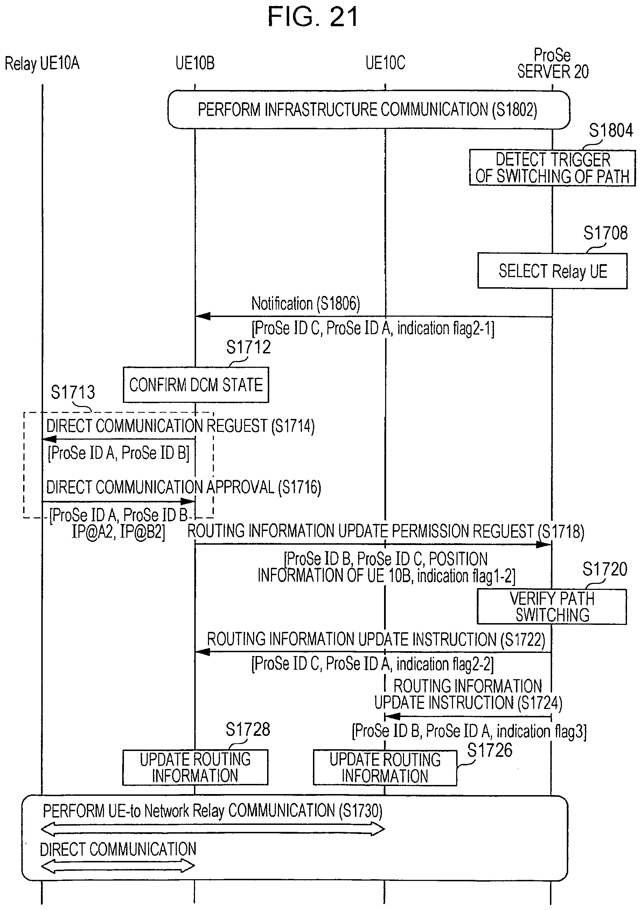

Next, a case where not the UE 10B but the ProSe server 20 detects a trigger for switching a path, and the ProSe server 20 leads to perform switching of a path or a communication channel, as a processing example which is different from that in Fig. 20 will be described with reference to Fig. 21. Processing which is the same as that in Fig. 20 is denoted by the same reference sign, and descriptions thereof will be omitted.

In Fig. 21, firstly, the UE 10B and the UE 10C perform the infrastructure communication (S1802). Here, packets in Figs. 11(a) and 11(b) may be transmitted and received.

The ProSe server 20 detects a trigger of switching a path from the infrastructure communication (S1804). Any trigger may be used in the process of S1804. For example, a case where the UE 10B is out of the coverage of the network access is considered.

The ProSe server 20 selects a Relay UE for the UE 10B (S1708).

### [2.2 Operation Flow of Device]

### [2.2.1 Operation Flow of UE 10B]

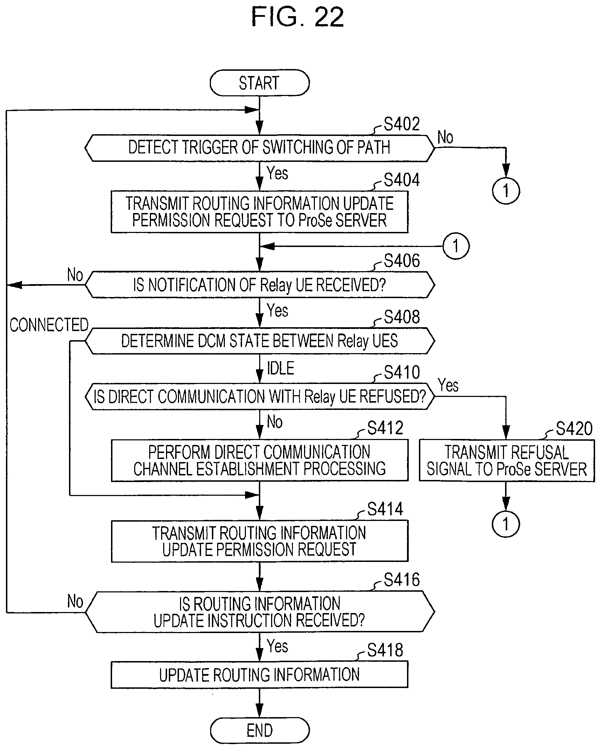

Fig. 22 illustrates an example of a flowchart diagram of the UE 10B, which realizes sequences in Figs. 20 and 21. The UE 10B waits for detection of a certain trigger for switching a path (Step S402).

If the trigger is detected in Step S402 (Step S402; Yes), the UE 10B transmits a routing-information update permission request (including the flag1-1) to the ProSe server 20 (Step S404).

After the process of Step S404, or in a case where the trigger for a path is not detected in Step S402 (Step S402; No), the UE 10B confirms reception of the Relay UE notification (flag2-1) from the ProSe server 20 (Step S406). Here, in a case where reception of a notification of a Relay UE is not possible, the process returns to Step S402 (Step S406; No).

In a case where the Relay UE notification including the flag2-1 is received from the ProSe server 20 in Step S406 (Step S406; Yes), the UE 10B determines the DCM state between the Relay UE and the UE 10B, based on the flag2-1 (Step S408).

In a case where the state between the UEs is the idle mode (Step S408; idle), it is confirmed whether the UE 10B refuses a Relay UE designated by the ProSe server 20 (Step S410). In a case of the refusal (Step S410; Yes), the UE 10B transmits a refusal signal to the ProSe server 20 (Step S420). Then, the process transitions to Step S406.

In a case where the refusal is not performed in Step S410 (Step S410; No), the UE 10B starts direct communication channel establishment processing (Step S412).

In a case where the state between the UEs is the connected mode in Step S408 (Step S408; connected), or in a case where a communication channel is established in Step S412, the UE 10B transmits the routing-information update permission request (flag1-2) to the ProSe server 20 (Step S414).

Then, the UE 10B confirms that the routing information update instruction (including the flag2-2) is received from the ProSe server 20 (Step S416).

In a case where the UE 10B does not receive the routing information update instruction in Step S416 (Step S416; No), the process returns to the first step (Step S402).

In a case where the UE 10B receives the routing information update instruction including the "indication flag2-2" in Step S416 (Step S416; Yes), the UE 10B updates the routing information (Step S418).

An example of a flowchart diagram of the Relay UE 10A, which realizes the sequences in Figs. 20 and 21 is the same as the flowchart diagram which realizes the sequences in Figs. 15 and 16. Thus, descriptions thereof will be omitted.

### [2.2.2 Operation Flow of ProSe Server 20]

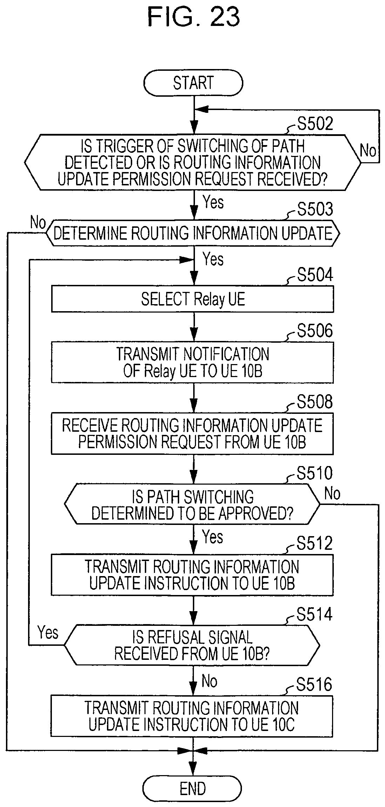

Fig. 23 illustrates an example of a flowchart diagram of the ProSe server 20, which realizes the sequences in Figs. 20 and 21.

The ProSe server 20 waits for detection of a certain trigger of switching a path or for reception of the routing-information update permission request (including the flag1-1) from the UE 10B (Step S502).

In a case where any trigger is detected in Step S502 (S502; Yes), the ProSe server 20 determines whether the routing information update request is permitted (Step S503).

Here, the determination of whether the ProSe server 20 permits the routing information update request may be performed based on whether or not the UE 10B completes service verification by the ProSe Registration.

For example, the determination may be performed based on the authentication information such as a ProSe ID, which is transmitted by the UE 10B. In addition, the determination may be performed based on whether or not the authentication information is provided. The determination may be performed based on a state of a resource in the network or a situation of congestion, a configuration by a user, and the operator policy generated from various factors.

In a case where update of the routing information is permitted in Step S503 (Step S503; Yes), the ProSe server 20 selects a Relay UE which performs the direct communication with the UE 10B (Step S504).

The selection method of the Relay UE is not particularly designated. For example, a UE having a Relay function which has the closest distance is selected. In a case where the ProSe server 20 refuses routing information update in Step S503 (Step S503; No), the ProSe server 20 ends the processing. In a case where determination of refusal is performed in Step S503 (Step S503; No), a message which means a notification of refusal may be transmitted to a transmission source of the routing information permission request, and the processing may be ended.

Then, the ProSe server 20 transmits the Relay UE notification (including the flag2-1) to the UE 10B (Step S506).

Then, the ProSe server 20 receives a routing-information update permission request including the "indication flag1-2, from the UE 10B (Step S508). The ProSe server 20 determines approval of switching a path, based on the flagl12 or based on the request in Step S508 (Step S510) .

Here, the determination of whether the ProSe server 20 permits the routing information update request in Step S508 may be performed based on whether or not UE 10B completes the service verification by ProSe Registration. For example, the determination may be performed based on authentication information such as a ProSe ID, which is transmitted by the UE 10B.

In addition, the determination may be performed based on whether or not the authentication information is provided. The determination may be performed based on a state of a resource in the network or a situation of congestion, a configuration by a user, and the operator policy generated from various factors.

In a case where approval is performed in Step S510 (S510; Yes), the ProSe server 20 transmits the routing information update instruction (flag2-2) to the UE 10B, based on the approval (Step S512).

In a case where switching a path is refused in Step S510 (Step S510; No), the processing is ended.

Then, it is confirmed whether a refusal signal is received from the UE 10B in Step S512 (Step S514).

In a case where the refusal signal is received from the UE 10B in Step S514 (Step S514; Yes), the ProSe server 20 causes the process to returns to selection (Step S504) of a Relay UE.

In a case where the refusal signal is not received from the UE 10B in Step S514 (Step S514; No), the ProSe server 20 transmits the routing information update instruction (including the flag3) to the UE 10C (Step S516).

With the above descriptions, regarding a communication between the UE 10B and the UE 10C, a path can be switched, or a communication channel can be switched from the infrastructure communication to the UE-to-Network Relay communication which passes through the Relay UE 10A. In addition, selection of a path or a communication channel can be performed.

### [3. Third Embodiment]

A third embodiment will be described. In the third embodiment, similarly to the first embodiment, a communication system for switching from the infrastructure communication which passes through the network, to the UE-to-Network Relay communication in which a neighboring UE is used as a Relay1 UE will be described with reference to the following drawings.

In the embodiment, the structure of the mobile communication system in Fig. 1 can be used, and thus detailed descriptions thereof will be omitted. The structure of a UE or the structure of the ProSe server 20 in the mobile communication system is similar, and thus detailed descriptions thereof will be omitted.

### [3.1 Processing Example]

In this embodiment, the concept of switching a path in Fig. 9 can be used, and thus detailed descriptions thereof will be omitted. Regarding a flow of Relay data by encapsulating an IP header, or ProSe registration, detailed descriptions thereof will be omitted.

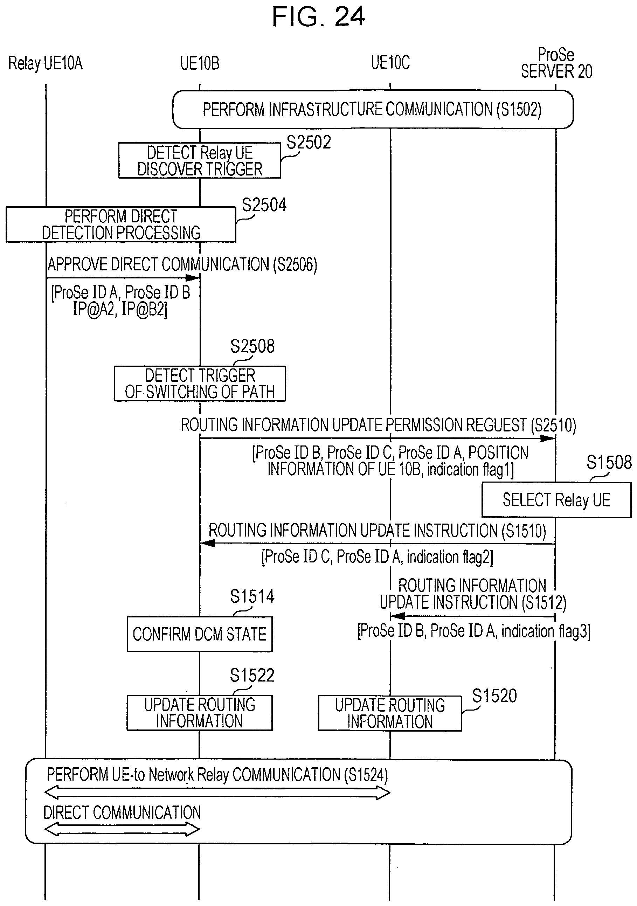

Fig. 24 is a diagram illustrating a service continuing procedure. Fig. 24 illustrates processing in which the UE 10B detects a Relay UE discover trigger, and thus the UE 10B discovers a Relay UE which allows the direct communication with the UE 10B, a communication channel is established, and then verification is required to the ProSe server 20.

In the embodiment, in a case where an instruction or a request of an operation for the communication counterpart wishes to be performed between the functions, a case where a flag referred to as an indication flag is added will be described. However, information indicating that a request is provided is not limited to a method for performing identification by using the flag. For example, a routing-information update request message is defined, and the defined routing-information update request message is transmitted, and thus the request may be performed. More specifically, equipment which performs a request or an instruction may transmit a request message which includes a message type for requiring update of routing information, to a request counterpart.

In the processing illustrated in Fig. 24, an information element which is included in a signal transmitted from the UE 10B to the ProSe server 20, and indicates an instruction or a request is set as an "indication flag1". An information element which is included in a signal transmitted from the ProSe server 20 to the UE 10B, and indicates an instruction or a request is set as an "indication flag2". An information element which is included in a signal transmitted from the ProSe server 20 to the UE 10C, and indicates an instruction or a request is set as an "indication flag3".

In Fig. 24, functions of the "indication flag2" and the "indication flag3" are similar to those in the first embodiment, and thus descriptions thereof will be omitted.

The function of the "indication flag1" in Fig. 24 is set to require permission of switching a communication between the UE 10B and the UE 10C from the infrastructure communication to the UE-to-Network Relay communication which passes through the Relay UE 10A.

In an initial state of Fig. 24, the UE 10B and the UE 10C perform the infrastructure communication (S1502).

The UE 10B detects a certain Relay UE discover trigger (S2502). The Relay UE discovers trigger is a trigger for starting detection of a UE which functions as a Relay UE for the network, and is not particularly limited. For example, a case where a UE may be out of the coverage of the network is considered.

The UE 10B and the Relay UE 10A are detected based on the process of S2502 (S2504). The Relay UE 10A assigns an IP address for the direct communication to the UE 10B, and notifies the UE 10B of the assigned IP address (S2506).

Then, the UE 10B detects a switching trigger of a path (S2508). The switching trigger of a path is not particularly limited. For example, a case where the UE 10B is out of the coverage of the network is considered.

If the UE 10B detects the switching trigger of a path, the UE 10B transmits a routing-information update permission request to the ProSe server 20 (S2510).

The routing-information update permission request in S2510 may include the ProSe ID B, may include the ProSe ID C, or may include the ProSe ID A. The routing-information update permission request may include a position information

ID of the UE, may include the indication flag1, or may include a plurality of information elements among the above-described information elements. Thus, the ProSe server 20 can select the designated Relay UE (S1508). Processing similar to the processing in Fig. 15 in the first embodiment is denoted by the same reference sign, and descriptions thereof will be omitted.

With the above descriptions, the UE 10B can designate a Relay UE, and require the ProSe server 20 of a switching permission of a path.

### [4. Fourth Embodiment]

The third embodiment will be described. In this embodiment, similarly to the third embodiment, a communication system for switching from the infrastructure communication which passes through the network, to the UE-to-Network Relay communication in which a neighboring UE is used as a Relay UE will be described with reference to the following drawings.

In this embodiment, the structure of the mobile communication system in Fig. 1 in the first embodiment can be used, and thus detailed descriptions thereof will be omitted. The structure of a UE or the structure of the ProSe server in the mobile communication system is similar to that in the first embodiment, and thus detailed descriptions thereof will be omitted.

### [4.1 Processing Example]

In this embodiment, the concept of switching a path in Fig. 9 can be used, and thus detailed descriptions thereof will be omitted. Regarding a flow of Relay data by encapsulating an IP header, or ProSe registration, detailed descriptions thereof will be omitted.

### [4.1.1 First Processing Example]

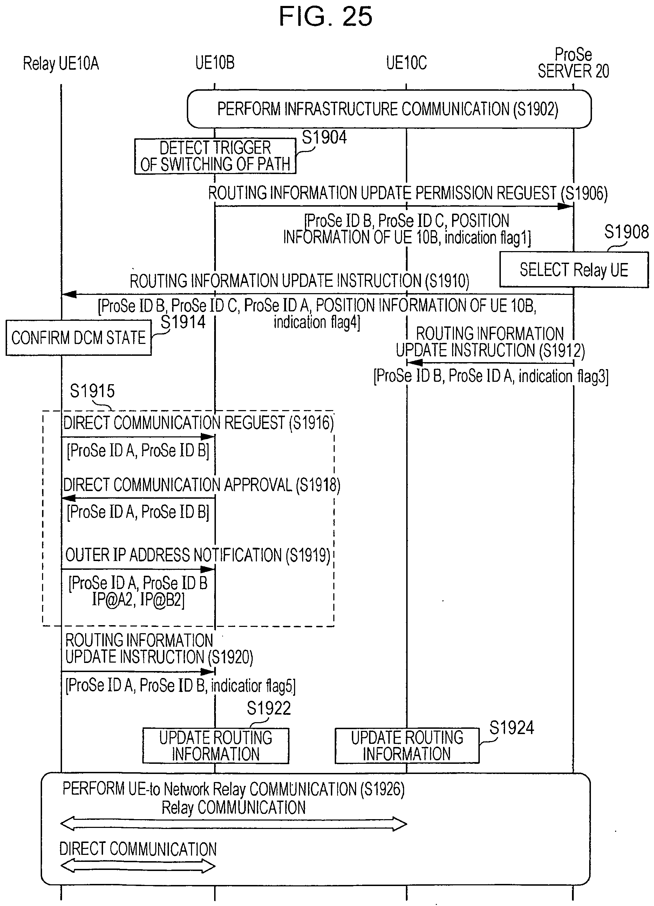

Firstly, a first processing example in this embodiment will be described. Fig. 25 illustrates processing in which the UE 10B detects a trigger of switching a path, and thus a path or a communication channel is switched from the infrastructure communication T905 to the UE-to-Network Relay communication which passes through the direct communication T901 and the Relay communication T903, regarding a communication between the UE 10B and the UE 10C.

In this embodiment, in a case where an instruction or a request of an operation for the communication counterpart wishes to be performed between the functions, a case where a flag referred to as an indication flag is added will be described. However, information indicating that a request is provided is not limited to a method for performing identification by using the flag. For example, a routing-information update request message is defined, and the defined routing-information update request message is transmitted, and thus the request may be performed. More specifically, equipment which performs a request or an instruction may transmit a request message which includes a message type for requiring update of routing information, to a request counterpart.

In the processing illustrated in Fig. 25, an information element which is included in a signal transmitted from the UE 10B to the ProSe server 20, and indicates an instruction or a request is set as an "indication flag1". An information element which is included in a signal transmitted from the ProSe server 20 to the UE 10C, and indicates an instruction or a request is set as an "indication flag3". An information element which is included in a signal transmitted from the ProSe server 20 to the Relay UE 10A, and indicates an instruction or a request is set as an "indication flag4". An information element which is included in a signal transmitted from the Relay UE 10A to the UE 10B, and indicates an instruction or a request is set as an "indication flag5".

The "indication flag1" and the "indication flag3" are similar to those in the first embodiment, and thus descriptions thereof will be omitted.

The "indication flag4" is a flag for requiring a function as a Relay UE between designated UEs. That is, the ProSe server 20 transmits a routing information update instruction including the "indication flag4", to the Relay UE 10A, and thus the ProSe server 20 can require the Relay UE 10A to function as a Relay UE for a communication between the UE 10B and the UE 10C.

The "indication flag4" is a flag indicating a request of confirming a DCM state between the designated UE and the own terminal. That is, the ProSe server 20 transmits a routing information update instruction including the "indication flag4", to the Relay UE 10A, and thus the ProSe server 20 can require the Relay UE 10A to confirm the DCM state between the UEs 10B.

The "indication flag4" is a flag for an instruction of establishing a communication channel in a case where, as a result of confirming the DCM state between the own terminal and the UE 10B, the DCM state is the idle mode. As a result, in a case where the DCM state indicates a connected mode, the "Indication flag4" is a flag indicating that processing is not particularly required.

For example, the ProSe server 20 transmits a routing information update instruction including the "indication flag4", to the Relay UE 10A. Thus, the ProSe server 20 can require the Relay UE 10A to confirm the DCM state with the UE 10B, and to establish a direct communication channel with the UE 10B in a case where the DCM state is the idle mode.

The "indication flag4" is a flag for transmitting a routing information update instruction to the designated UE after a communication channel between the designated UE and the own terminal is established. That is, the ProSe server 20 transmits a routing update instruction including the "indication flag4", to the Relay UE 10A, and thus the ProSe server 20 can require to the Relay UE 10A to transmit the routing information update instruction to the UE 10B after the communication channel is established or after being connected mode is confirmed.

The "indication flag4" may indicate implication obtained by combining the request or the instruction which is described until now.

The "indication flag5" is a flag indicating that switching from the infrastructure communication T905 to the UE-to-Network Relay communication which passes through the Relay UE 10A is required. The "indication flag5" may be a flag indicating that switching from the UE-to-Network Relay communication to the infrastructure communication T905 is required.

That is, the Relay UE 10A transmits a routing information update instruction including the "indication flag5", to the UE 10B, and thus, the Relay UE 10A can require the UE 10B to update of routing information so as to switch a communication with the UE 10C from the infrastructure communication T905 to the UE-to-Network Relay communication which passes through the direct communication with the Relay UE 10A, and can require the UE 10B to update of routing information so as to perform switching to the UE-to-Network Relay communication which passes through the infrastructure communication with the Relay UE 10A.

The "indication flag5" may be a flag for an instruction of requiring the ProSe server 20 of permission regarding switching from the infrastructure communication T905 to the UE-to-Network Relay communication which passes through the Relay UE 10A. In addition, the "indication flag5" may be a flag for an instruction of requiring the ProSe server 20 of permission regarding switching from the UE-to-Network Relay communication to the infrastructure communication T905.

That is, the Relay UE 10A transmits a routing information update instruction including the "indication flag5", to the UE 10B, and thus the Relay UE 10A may require the UE 10B and the ProSe server 20 of switching from the infrastructure communication to the UE-to-Network Relay communication which passes through the Relay UE 10A.

The "indication flag5" may indicate implication obtained by combining the request or the instruction which is described until now.

In the example illustrated in Fig. 25, the "indication flag1" is set as a flag indicating a request of switching a path or a communication channel, a request of selecting a Relay UE to be connected to the UE 10B, a request of notifying the Relay UE 10A and the UE 10C of the Relay UE, and a request of instructing the Relay UE 10A to establish a communication channel between the Relay UE and the UE 10B.

The "indication flag3" is set as a flag indicating a request to the UE 10C for an instruction of updating routing information, so as to switch a communication between the UE 10C and the UE 10B from the infrastructure communication T905 to the UE-to-Network Relay communication which passes through the Relay communication T903 with the Relay UE 10A.

The "indication flag4" is set as a flag for requiring the Relay UE 10A to confirm a DCM state between the UE 10B and the Relay UE 10A, and for requiring transmission of a signal indicating the routing information update instruction so as to perform switching from the infrastructure communication T905 to the UE-to-Network Relay communication which passes through the direct communication T901 with the Relay UE 10A, to the UE 10B.

The "indication flag5" is set as a flag for requiring the UE 10B to update a communication routing so as to perform switching from the infrastructure communication to the UE-to-Network Relay communication which passes through the Relay UE 10A.

In the initial state in Fig. 25, a communication between the UE 10B and the UE 10C is performed on the infrastructure communication T905 (S1902). The process of S1902 may be the same as the processes of S1502, S1702, and S1802.

The UE 10B detects a trigger of switching a path (S1904). The trigger of switching a path of a communication to the UE-to-Network Relay communication is not particularly limited. For example, the UE 10B may use detection of the UE 10B being out of coverage of the network, as the trigger.

The trigger is detected in S1904, and then the UE 10B transmits a routing-information update permission request to the ProSe server 20 (S1906). The routing-information update permission request in S1906 may include the ProSe ID B for identifying the UE 10B, and may include the ProSe ID C for identifying the UE 10C which is set as a communication counterpart. The routing-information update permission request may include position information of the UE 10B, may include the indication flag1, and may include a plurality of information elements among the above-described information elements.

If the ProSe server 20 receives the routing-information update permission request including the "indication flag1" from the UE 10B, or if the ProSe server 20 receives a message including the request, the ProSe server 20 selects a Relay UE to be connected to the UE 10B based on the indication flag1 or based on the request (S1908).

In a case where selection of the optimum Relay UE is not possible in S1908, any processing does not be needed.

The ProSe server 20 transmits a routing information update instruction to the Relay UE 10A, based on the "indication flag1" included in the routing-information update permission request which has been received from the UE 10B, based on the request in S1906, or based on selection of a Relay UE (S1910).

The routing information update instruction in S1910 may include the ProSe ID A for identifying the Relay UE 10A, or may include the ProSe ID B for identifying the UE 10B. The routing information update instruction may include the ProSe ID C for identifying the UE 10C which is set as the communication counterpart, may include position information of the UE 10B, may include the "indication flag4", or may include a plurality of information elements as described above.

In a case where the routing-information update permission request transmitted from the UE 10B in S1906 includes the "indication flag1", the ProSe server 20 transmits a routing information update instruction to the UE 10C based on the "indication flag1", simultaneously to the S1910 or after S1910 (S1912).

The process of S1912 may be performed based on, for example, a request from another device, a selection result (S1908) of selecting a Relay UE, a point (S1910) that the routing information update instruction is transmitted from the ProSe server 20 to the Relay UE 10A, and the like.

The routing information update instruction transmitted from the ProSe server 20 in S1912 is similar to that in S1512 described in the first embodiment, and thus descriptions thereof will be omitted.

If the Relay UE 10A receives the routing information update instruction from the ProSe server 20 or if the Relay UE 10A receives a message including the request, the Relay UE 10A confirms a DCM state between the Relay UE 10A and the UE 10B, based on the "indication flag4" in S1910 (S1914).

The Relay UE 10A can refuse the direct communication between the Relay UE 10A and the UE 10B. In this case, the Relay UE 10A transmits a refusal signal to the ProSe server 20.

In a case where, as a result of the confirmation in S1914, it is determined to be the idle mode, the process of S1915 is performed as processing.

That is, the Relay UE 10A transmits a direct communication request to the UE 10B (S1916). The direct communication request in S1916 includes the ProSe ID A for identifying the Relay UE, and the ProSe ID B for identifying the UE 10B. In addition, any of the ProSe ID A and the ProSe ID B may be included in the direct communication request.

The UE 10B receives the direct communication request from the UE 10A. The UE 10B verifies the direct communication based on a list obtained by storing the identifier of the Relay UE 10A in the storage unit 130, and transmits a direct communication approval to the Relay UE 10A (S1918).

The direct communication approval in S1918 includes the ProSe ID A which is the identifier of the Relay UE 10A, and the ProSe ID B which is the identifier of the UE 10B. Any identifier of the ProSe ID A and the ProSe ID B may be included.

If the Relay UE 10A receives direct communication verification from the UE 10B, the Relay UE 10A establishes a direct communication channel between the Relay UE 10A and the UE 10B. Here, the UE 10A assigns the outer IP address IP@A2 of the Relay UE 10A, and the outer IP address IP@B2 of the UE 10B which are used as outer IPs in direct communication.

The Relay UE 10A transmits an outer IP address notification for notifying the UE 10B of assignment of an IP address for the direct communication based on the process of S1916 (S1919). The outer IP address notification includes the outer IP address IP@A2 assigned to the Relay UE 10A, and the outer IP address IP@B2 assigned to the UE 10B. The outer IP address notification may include the ProSe ID A which is the identifier of the Relay UE 10A, and may include the ProSe ID B which is the identifier of the UE 10B.

In a case where, as a result of the confirmation in S1914, it is determined to be the connected mode, or in a case where the process of S1915 is completed, the Relay UE 10A which is one of the Relay UE 10A and the UE 10B transmits a routing information update instruction to the UE 10B (S1920). The routing information update in S1920 includes the ProSe ID A for identifying the Relay UE 10A, the ProSe ID B for identifying the UE 10B, and the "indication flag5".

The trigger occurs in S1921, and thus the UE 10B updates routing information from the infrastructure communication to the UE-to-Network Relay communication which passes through the direct communication with the Relay UE 10A (S1922).

The trigger occurs in S1912, and thus the UE 10C updates the routing information (S1924).

As described above, the UE 10B detects a trigger, and thus can switch a path or a communication channel from the infrastructure communication T905 to the UE-to-Network Relay communication which passes through the Relay UE 10A (S1926).

### [4.1.2 Second Processing Example]

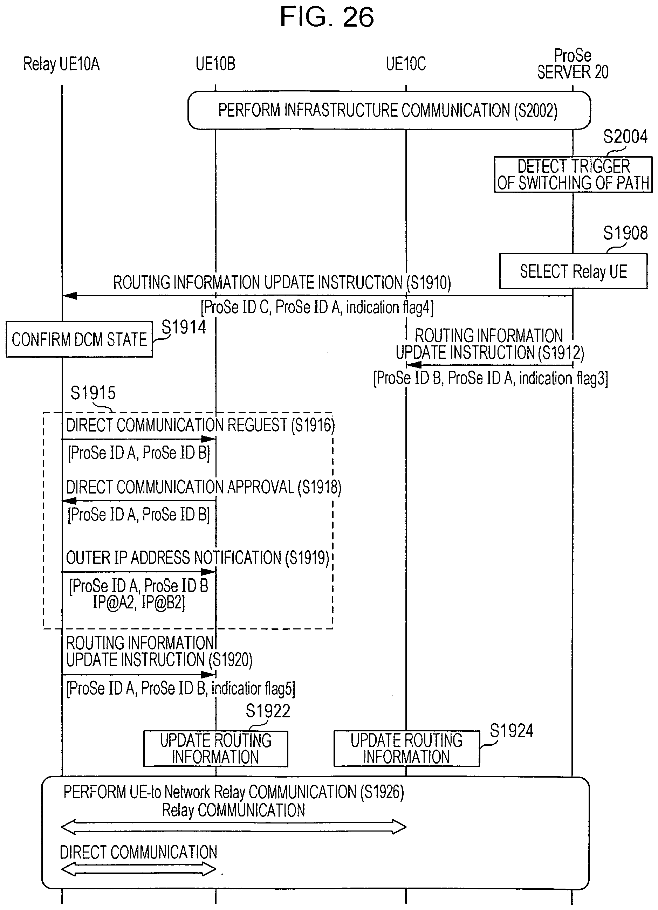

A second processing example in this embodiment will be described with reference to Fig. 26. Fig. 26 for the second processing example illustrates a processing example which is different from that in Fig. 25 for the first processing example. Fig. 26 illustrates an example of a method in which the ProSe server detects a trigger of switching a communication channel or a path routing between the UE 10B and the UE 10C.

The functions of the "indication flags 1, 3, 4, and 5" in Fig. 26 are similar to those in Fig. 25, and thus descriptions thereof will be omitted.

The UE 10B and the UE 10C perform transmission and reception of data in the infrastructure communication T905 (S2002). The process of S2002 may be similar to the processes of S1502, S1702, and 1902.

The ProSe server 20 detects a trigger of switching a path from the infrastructure communication (S2004). Any trigger may be used in the process of S2004. For example, the ProSe server 20 may detect that the UE 10B is out of the coverage of the network access.

Detection of the trigger in S2004 causes the ProSe server 20 to select a Relay UE which is optimum for the UE 10B (S1908). The selection method for the Relay UE is not particularly limited. For example, selection based on position information of a UE registered in the Proe server is considered. Processes subsequent to the process of S1908 are similar to those subsequent to the process of S1908 in Fig. 25.

### [4.2 Operation Flow of Device]

An operation flow of each device will be described.

### [4.2.1 Operation Flow of UE 10B]

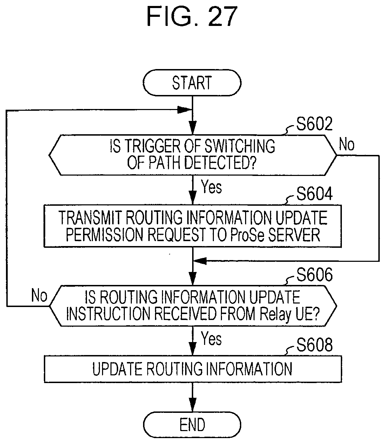

Firstly, Fig. 27 illustrates an example of a flowchart diagram of the UE 10B, which realizes sequences in Figs. 25 and 26. The UE 10B waits for detection of a certain trigger for starting to switch a communication with the UE 10C from the infrastructure communication to the UE-to-Network Relay communication (Step S602). Here, in a case where the switching trigger for a path is detected (Step S602; Yes), the UE 10B transmits a routing-information update permission request (including the flag1) to the ProSe server 20 (Step S604).

Then, after the process of Step S604 is ended or in a case where the switching trigger for a path is not detected in Step S602 (Step S602; No), the UE 10B waits for reception of the routing information update instruction from the Relay UE 10A (Step S606). In a case where reception of the routing information update instruction in Step S606 is not possible (Step S606; No), the UE 10B determines that the switching of a path is not permitted to the ProSe server 20, and the process returns to Step S602.

In a case where the UE 10B receives the routing information update instruction from the Relay UE 10A in Step S606 (Step S606; Yes), the UE 10B updates the routing information (Step S608).

### [4.2.2 Operation Flow of Relay UE 10A]

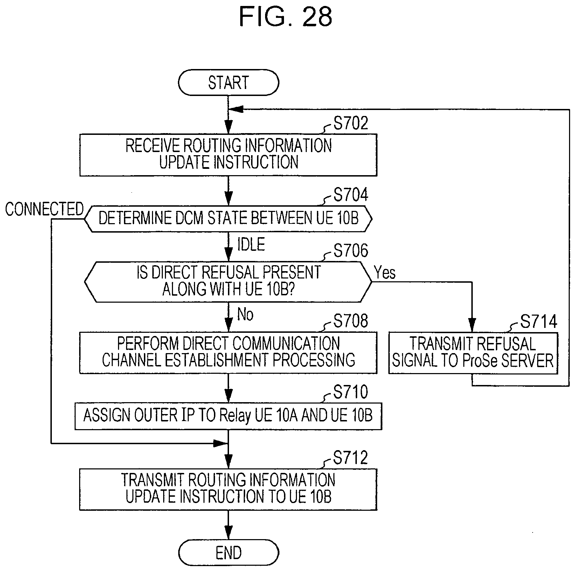

Next, Fig. 28 illustrates an example of a flowchart diagram of the Relay UE 10A, which realizes the sequences in Figs. 25 and 26. Firstly, the Relay UE 10A receives a routing information update instruction from the ProSe server 20 (Step S702).

The Relay UE 10A determines a DCM state between the Relay UE 10A and the UE 10B, based on the "indication flag4" or the request (Step S704).

In a case where the DCM state is the idle mode (Step S704; idle), the UE 10A confirms whether the communication with the UE 10B is refused (Step S706).

Here, the determination of whether the Relay UE 10A permits the request may be performed based on a state of a resource in the network or a situation of congestion, a configuration by a user, and the terminal policy generated from various factors.

In a case where the direct communication with the UE 10B is refused in Step S706 (Step S706; Yes), the Relay UE 10A transmits a refusal signal to the ProSe server 20 (Step S714).

In a case where the direct communication with the UE 10B is not refused in Step S706 (Step S706; No), the Relay UE 10A establishes a direct communication channel (Step S708).

Then, the Relay UE 10A assigns outer IPs to the Relay UE 10A and the UE 10B (Step S710).

After the process of Step S710, in a case where it is determined that the DCM state between the UEs is the connected mode, in Step S704 (Step S704; connected), the Relay UE 10A transmits a routing information update instruction to the UE 10B (Step S712).

### [5. Fifth Embodiment]

A fifth embodiment will be described. The fifth embodiment corresponds to processing obtained by modifying the fourth embodiment. In the fifth embodiment, the following case will be described. That is, in the fifth embodiment, the ProSe server leads switching of a path or a communication channel from the infrastructure communication between the UE 10B and the UE 10A, to the UE-to-Network Relay communication which is performed in such a manner that the UE 10B directly communicating with the Relay UE 10A so as to communicate with the UE 10C, and an instruction of updating the routing information is transmitted from the ProSe server 20 to the Relay UE 10A and the UE 10C after the direct communication channel is established.

The structure of the entirety of the system or the structure of each device is commonly used with that in the fourth embodiment. Thus, a part different from that in the fourth embodiment will be described.

### [5.1 Processing Example]

### [5.1.1 First Processing Example]

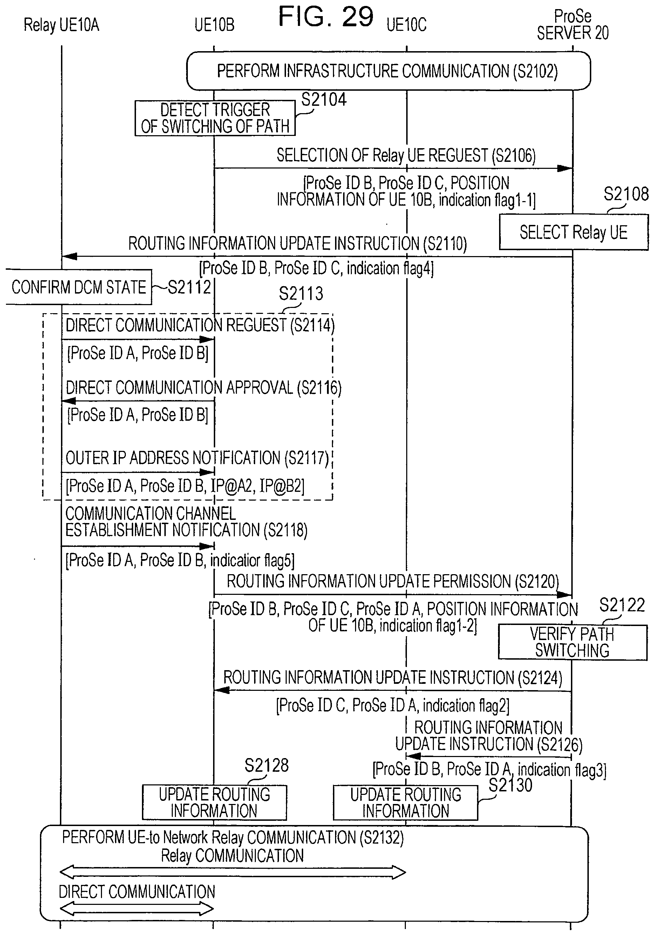

Fig. 29 is a sequence diagram in this embodiment. In Fig. 29, the "indication flag1-1" and the "indication flag1-2" are set as a flag which is included in a signal transmitted to the ProSe server 20 from the UE 10B and indicates an instruction or a request.

The "indication flag2" is set as a flag which is included in a signal transmitted to the UE 10B from the ProSe server 20 and indicates an instruction or a request.

As a flag which is included in a signal transmitted to the UE 10C from the ProSe server 20 and indicates an instruction or a request, the "indication flag3" is set similarly to in Figs. 15 and 16. The "indication flag4" is set as an information element which is included in a signal transmitted to the Relay UE 10A from the ProSe server 20 and indicates an instruction or a request. The "indication flag5" is set as an information element which is included in a signal transmitted from the Relay UE 10A to the UE 10B and indicates an instruction or a request.

The "indication flag1-1", the "indication flag1-2", the "indication flag2", and the "indication flag3" are the same as those in the first embodiment, and thus descriptions thereof will be omitted. Similarly, the "indication flag4" and the "indication flag5" are similar to those in Fig. 25, and thus descriptions thereof will be omitted.

In Fig. 29, the "indication flag1-1" is a flag for requiring the ProSe server 20 to select a Relay UE which is used in the direct communication for updating the routing information, for requiring a response of the selected Relay UE, and for requiring an instruction of confirming a DCM state.

The "indication flag1-2" is a flag for requiring the ProSe server 20 to permit routing information update, and for requiring an instruction of confirming the DCM state.

The "indication flag2" is a flag for requiring the UE 10B to update the routing information so as to perform switching from the infrastructure communication to the UE-to-Network Relay communication which passes through the Relay UE 10A in the direct communication.

In Fig. 29, the "indication flag4" is set as a flag for requiring the Relay UE 10A to confirm a DCM state between the UE 10B and the Relay UE 10A. In a case where, as a result of confirming the DCM state, the DCM state is an idle mode, the "indication flag4" is used for a request of establishing a communication channel of the direct communication channel, and for requiring an instruction of notifying the UE 10B to establish the communication channel.

The "indication flag5" is set as a flag for requiring the UE 10B to cause the ProSe server 20 to permit update of a communication route from the infrastructure communication to the UE-to-Network Relay communication which passes through the Relay UE 10A.

In the initial state in Fig. 29, firstly, the UE 10B and the UE 10C perform the infrastructure communication (S2102). Here, packets in Figs. 11(a) and 11(b) are transmitted and received.

The UE 10B detects a trigger for switching a path or a communication channel (S2104). The trigger for switching a path in S2104 is not particularly limited. For example, a point that the UE 10B is out of the coverage of the network may be used as the trigger. The process of S2104 may be similar to the process of S1904 in Fig. 25.

If the UE 10B detects the trigger for switching a path in S2104, the UE 10B transmits a Relay UE selection request for a notification of switching a path, to the ProSe server 20 (S2106).

The Relay UE selection request in S2106 may include an ID (ProSe ID B) for identifying the UE 10B which is set as a transmission source. The routing-information update permission request may include an identifier (ProSe ID C) of the UE 10C which is a communication counterpart of the current infrastructure communication by the UE 10B, or may include a position information ID of the UE 10B. The routing-information update permission request may include the "indication flag1-1", or may include a plurality of information elements among the above-described information elements.

The ProSe server 20 receives the Relay UE selection request from the UE 10B in S2106. AT this time, in a case where the received Relay UE selection request includes the "indication flag1-1", the ProSe server 20 selects a Relay UE to which the UE 10B is connected, based on the "indication flag1-1" (S2108). The selection method of the Relay UE is not particularly limited. For example, selection based on position information of a UE registered in the ProSe server is considered. In a case where it is determined that selection of the Relay UE by the ProSe server 20 is not possible, the processing may be ended.

In a case where the ProSe server 20 receives the Relay UE selection request including the "indication flag1-1", or in a case where the ProSe server 20 receives a message including the request, the ProSe server 20 transmits a routing information update instruction to the Relay UE 10A, based on the "indication flag1-1" or based on the request (S2110).

The routing information update instruction in S2110 may include the identifier (ProSe ID B) of the UE 10B, may include the identifier (ProSe ID C) of the UE 10C which is a communication counterpart of the UE 10B. The routing information update instruction may include the indication flag4, or may include a plurality of information elements among the above-described information elements.

If the Relay UE 10A receives the routing information update instruction including the "indication flag4", from the ProSe server 20, the Relay UE 10A confirms a DCM state between the UE 10B and the UE 10A, based on the indication flag4" or based on the request (S2112).

In a case where the routing information update instruction received by the Relay UE 10A does not include the "indication flag4" in S2110, the Relay UE 10A may end the processing.

In a case where the DCM state is the idle mode in S2112, the processing included in S2113 is performed. The process of S2113 is constituted by the processes of S2114, S2116, and S2117.

Firstly, the Relay UE 10A transmits a direct communication request to the UE 10B (S2114). The direct communication request in S2114 may include the identifier (ProSe ID A) of the UE 10A which is a transmission source, may include the identifier (ProSe ID B) of the UE 10B, or may include a plurality of information elements.

The UE 10B receives the direct communication request from the Relay UE 10A, and transmits a direct communication approval to the Relay UE 10A (S2116). The direct communication approval in S2116 includes the identifier (ProSe ID A) of the UE 10A and the identifier (ProSe ID B) of the UE 10B.

The Relay UE 10A receives the direct communication approval from the UE 10B. The UE 10A assigns the outer IP address IP@A2 of the Relay UE 10A, and the outer IP address IP@B2 of the UE 10B which are used as outer IPs in direct communication, based on the direct communication approval.

If the assignment of an outer IP address is ended, the UE 10A transmits an outer IP address notification to the UE 10B (Step S2117). The outer IP address notification includes the outer IP address IP@A2 assigned to the Relay UE 10A, and the outer IP address IP@B2 assigned to the UE 10B. The outer IP address notification may include the ProSe ID A which is the identifier of the Relay UE 10A, and may include the ProSe ID B which is the identifier of the UE 10B.

In a case where it is determined that the DCM state is the connected mode, in S2112, or in a case where the communication channel is established by the process of S2113, the Relay UE 10A transmits a communication channel establishment notification to the UE 10B (S2118). The communication channel establishment notification in S2118 may include the identifier (ProSe ID A) of the Relay UE 10A, may include the identifier (ProSe ID B) of the UE 10B, may include the "indication flag5", or may include a plurality of identifiers.

The UE 10B updates the outer IP address management table 136 in the storage unit 130, based on assignment of an IP address for the direct communication, which is received from the Relay UE 10A, in S2117, or based on the communication channel establishment notification received in S2118. The UE 10B transmits a routing-information update permission request to the ProSe server 20 (S2120). The routing-information update permission request may include the identifier (ProSe ID B) of the UE 10B, may include the identifier (ProSe ID C) of the UE 10C, or may include the identifier (ProSe ID A) of the Relay UE 10A. The routing-information update permission request may include position information of the UE 10B, may include the "indication flag1-2", or may include a plurality of information elements.

The ProSe server 20 receives the routing-information update permission request from the UE 10B. In a case where the routing-information update permission request includes the "indication flag1-2", or in a case where the ProSe server 20 receives a message including the request, the ProSe server 20 verifies switching of a path based on the "indication flag1-2", or based on the request (S2122).

The ProSe server 20 transmits a routing information update instruction to the UE 10B and the UE 10C, based on the "indication flag1-2", or based on the verification of switching a path (S2124, S2126). The processes of S2124 and S2126 may be performed simultaneously. In addition, one of the processes of S2124 and S2126 may function as a trigger of another. For example, a point that the routing information update instruction is transmitted from the ProSe server 20 to the UE 10B (S2124) may function as a trigger, and thus the ProSe server 20 may transmit the routing information update instruction to the UE 10C (S2126).

The routing information update instruction in S2124 may include the identifier (ProSe ID C) of the UE 10C, may include the identifier (ProSe ID A) of the Relay UE 10A, may include the "indication flag2", or may include a plurality of information elements.

The routing information update instruction in S2126 may include the identifier (ProSe ID B) of the UE 10B, may include the identifier (ProSe ID A) of the Relay UE 10A, may include the "indication flag3, or may include a plurality of information elements.

The UE 10B receives the routing information update instruction from the ProSe server 20 (S2124), and thus updates the routing information toward the UE 10C from the infrastructure communication to the UE-to-Network Relay communication which passes through the direct communication with the Relay UE 10A (S2128).

Similarly, the UE 10C receives the routing information update instruction from the ProSe server 20 (S2126), and thus updates the routing information toward the UE 10B from the infrastructure communication to the UE-to-Network Relay communication which passes through the direct communication with the Relay UE 10A (S2130).

With the above descriptions, transmission and reception in the UE-to-Network Relay communication is performed between the UE 10B and the UE 10C (S2132).

### [5.1.2 Second Processing Example]

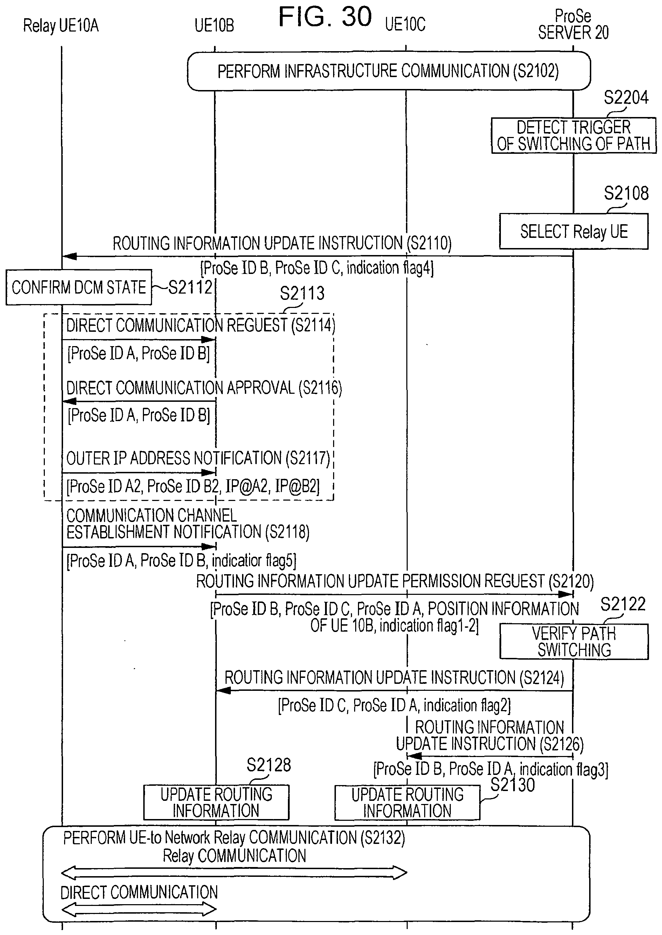

A second processing example will be described. Fig. 30 illustrates a processing example which is different from the first processing example in Fig. 29 will be described. Fig. 30 illustrates an example of a method in which the ProSe server detects a trigger of switching a communication channel or a path route between the UE 10B and the UE 10C.

The functions of the "indication flags 1-2, 2, 3, 4, and 5" in Fig. 30 are similar to those in Fig. 26, and thus descriptions thereof will be omitted.

In the initial state in Fig. 30, a communication between the UE 10B and the UE 10C is performed in the infrastructure communication T905 (S2202). The process of S2202 may be the same as the processes of S1502, S1702, S1902, S2002, and S2102.

The ProSe server 20 detects a trigger of switching a path from the infrastructure communication (S2204). Any trigger may be used in the process of S2204. For example, the ProSe server 20 may detect that the UE 10B is out of the coverage of the network access.

Detection of the trigger in S2204 causes the ProSe server 20 to select a Relay UE which is optimum for the UE 10B (S2108). The selection method for the Relay UE is not particularly limited. For example, selection based on position information of a UE registered in the ProSe server is considered. Processes subsequent to the process of S2108 are similar to those subsequent to the process of S2108 in Fig. 29.

### [5.2 Operation Flow of Device]

### [5.2.1 Operation Flow of UE 10B]

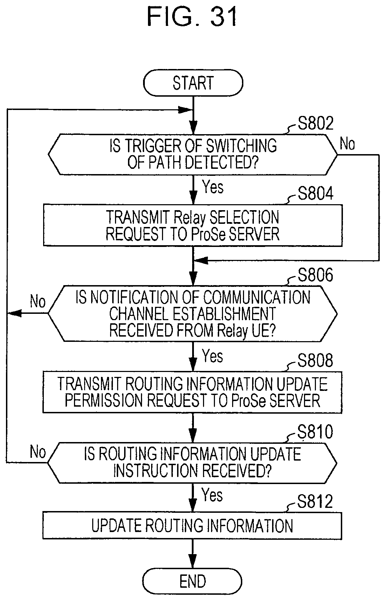

Fig. 31 illustrates an example of a flowchart diagram of the UE 10B, which realizes sequences in Figs. 29 and 30.

The UE 10B waits for detection of a certain trigger for switching a communication with the UE 10C from the infrastructure communication to the UE-to-Network Relay communication (Step S802). In a case where the UE 10B detects the switching trigger for a path in Step S802 (Step S802; Yes), the UE 10B transmits a Relay UE selection request (including the flag1-1) to the ProSe server 20 (Step S804).

After the process of Step S804 is performed, or in a case where the switching trigger for a path is not detected in Step S802 (Step S802; No), the UE 10B waits for reception of a communication route establishment notification from the Relay UE (Step S806).

In a case where the communication route establishment notification is received from the Relay UE in Step S806 (Step S806; Yes), the UE 10B transmits a routing-information update permission request (flag1-2) to the ProSe server 20 (Step S808).

In a case where the communication route establishment notification is not received from the Relay UE 10A in Step S806 (Step S806; No), the process returns to Step S802.

After the process of Step S806, the UE 10B waits for reception of the routing information update instruction (including the flag2) from the ProSe server 20 (Step S810). In a case where a response is not received from the ProSe server 20 for a predetermined period (Step S810; No), the UE 10B determines that update of the routing information is refused, and the process returns to Step S802.

In a case where the routing update instruction is received from the ProSe server 20 in Step S810 (Step S810; Yes), the UE 10B updates routing information (Step S812), and ends the processing.

An example of a flowchart diagram of the Relay UE 10A, which realizes the sequences in Figs. 29 and 30 is the same as the flowchart diagram which realizes the sequences in Figs. 25 and 26. Thus, descriptions thereof will be omitted.

### [5.2.2 Operation Flow of ProSe Server 20]

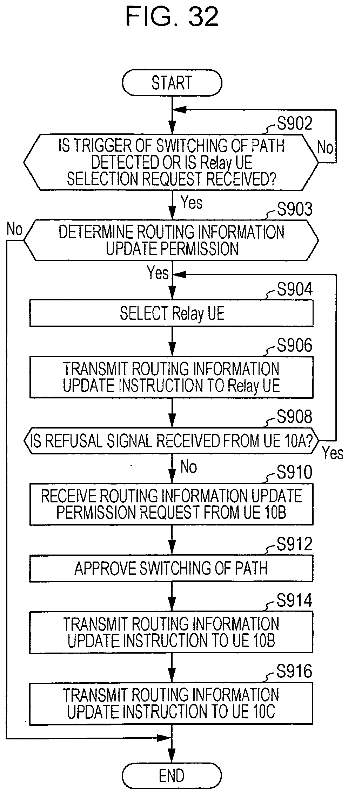

Fig. 32 illustrates an example of a flowchart diagram of the ProSe server 20, which realizes the sequences in Figs. 29 and 30.

Firstly, the ProSe server 20 waits for detection of a switching trigger for a path, or reception of a Relay UE selection request (Step S902).

If the switching triggers for a path is detected, or the Relay UE selection request (including the flag1-1) is received from the UE 10B in Step S902 (Step S902; Yes), the ProSe server 20 determines that the routing information of a UE is updated (Step S903).

Here, the determination of whether the ProSe server 20 permits the routing information update request may be performed based on whether or not the UE 10B completes service verification by ProSe Registration. For example, the determination may be performed based on authentication information such as a ProSe ID, which is transmitted by the UE 10B. In addition, the determination may be performed based on whether or not the authentication information is provided. The determination may be performed based on a state of a resource in the network or a situation of congestion, a configuration by a user, and the terminal policy generated from various factors.

In a case where update of the routing information is permitted in Step S903 (Step S903; Yes), the ProSe server 20 selects a Relay UE with which the UE 10B performs the direct communication (Step S904). The selection method of the Relay UE is not particularly designated. For example, a UE having a Relay function which has the closest distance is selected. In a case where the ProSe server 20 refuses routing information update in Step S903 (Step S903; No), the ProSe server 20 ends the processing. In a case where determination of refusal is performed in Step S903 (Step S903; No), a message which means a notification of refusal may be transmitted to a transmission source of the routing information permission request, and the processing may be ended.

Then, the ProSe server 20 transmits a routing information update instruction (including the flag4) to the Relay UE (Step S906). Thus, the Relay UE 10A is instructed to establish a communication channel with the UE 10B is performed.

Then, the ProSe server 20 confirms whether a refusal signal is received from the UE 10A (Step S908). In a case where the refusal signal is received in Step S908 (Step S908; Yes), the ProSe server 20 starts processes from the selection of a Relay UE in Step S904, again.

If the refusal signal is not received from the UE 10A (Step S908; No), the ProSe server 20 receives the routing-information update permission request (including the flag1-2) from the UE 10B (Step S910).

Then, the ProSe server 20 approves switching of a path, based on the flag1-2 included in the routing-information update permission request in Step S910 (Step S912).

If approval of switching a path is ended, the ProSe server 20 transmits a routing information update instruction to the UE 10B and the UE 10C (Step S914, S916).

Hitherto, regarding a communication between the UE 10B and the UE 10C, a path or a communication channel may be switched from the infrastructure communication to the UE-to-Network Relay communication which passes through the direct communication with the Relay UE 10A or a path or a communication channel may be selected.

### [6. Sixth Embodiment]

A sixth embodiment will be described. In this embodiment, a communication system in which a neighboring UE is connected as a Relay UE in the direct communication, and a path of a communication channel is switched from the UE-to-Network Relay communication to the infrastructure communication which passes through the network, or a path or a communication channel is selected will be described with reference to the following drawings.

In this embodiment, the structure of the mobile communication system in Fig. 1 can be used, and thus detailed descriptions thereof will be omitted. The structure of a UE or the structure of the ProSe server in the mobile communication system is similar, and thus detailed descriptions thereof will be omitted.

### [6.1 Descriptions for Communication]

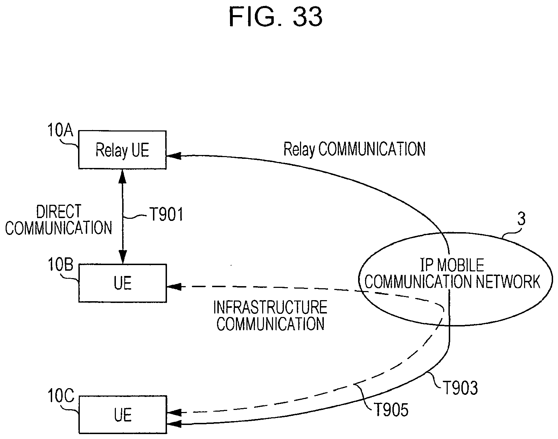

An outline of processing which will be described in this embodiment will be described below. Fig. 33 is a conceptual diagram illustrating switching of a path, switching of a communication channel, and selection of a path or a communication channel which are performed in this embodiment. In the initial state in this embodiment, the UE 10B and the UE 10C communicate with each other in the UE-to-Network Relay communication (solid line) T903 which passes through the Relay UE 10A. In a form understood from Fig. 33, the UE 10B and the Relay UE 10A communicate with each other in the direct communication T901.

In the initial state, a certain trigger occurs in a UE or the network, and thus a path or a communication channel is switched to the infrastructure communication (broken line) T905 or a path or a communication channel is selected.

### [6.2 Flow of Data of Relay by Encapsulating IP Header]

Regarding a flow of Relay data by encapsulating an IP header or ProSe registration, Figs. 10 to 14 can be used, and thus detailed descriptions thereof will be omitted.

### [6.3 Processing Example]

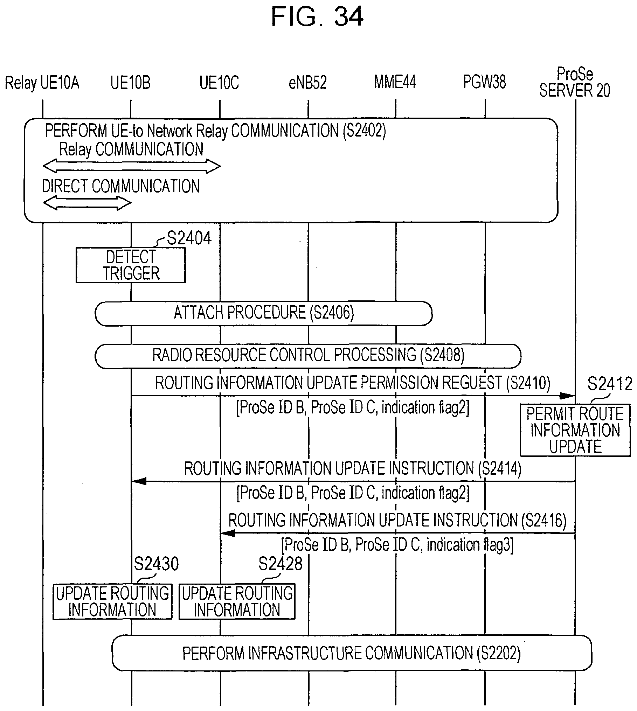

An example of processing of a service continuing procedure in the sixth embodiment will be described. Fig. 34 illustrates an example of processing in which the UE 10B detects a trigger for requiring switching from the UE-to-Network Relay communication to the infrastructure communication, and a path or a communication channel is switched.

In the embodiment, in a case where an instruction or a request of an operation for the communication counterpart wishes to be performed between the functions, a case where a flag referred to as an indication flag is added will be described. However, information indicating that a request is provided is not limited to a method for performing identification by using the flag. For example, a routing-information update request message is defined, and the defined routing-information update request message is transmitted, and thus the request may be performed. More specifically, equipment which performs a request or an instruction may transmit a request message which includes a message type for requiring update of routing information, to a request counterpart.

In the processing illustrated in Fig. 34, an information element which is included in a signal transmitted from the UE 10B to the ProSe server 20, and indicates an instruction or a request is set as an "indication flag1". An information element which is included in a signal transmitted from the ProSe server 20 to the UE 10C, and indicates an instruction or a request is set as an "indication flag3".

The "indication flag1" and the "indication flag2" are the same as those in the first embodiment, and thus descriptions thereof will be omitted.

In Fig. 34, the "indication flag1" is a flag for requiring permission of switching from the UE-to-Network Relay communication which passes through the Relay UE 10A, to the infrastructure communication.

The "indication flag3" is a flag for requiring the UE 10C to switch a communication route from the UE-to-Network Relay communication which passes through the Relay UE 10A, to the infrastructure communication.

In the initial state in Fig. 34, a state where the UE-to-Network Relay communication which passes through the Relay UE 10A is performed between the UE 10B and the UE 10C (S2402) occurs. The process of S2402 may be the same as the process of S1524, S1730, S1926, or S2132.

The UE 10B detects a trigger for requiring switching of a path or a communication channel (S2404). The trigger detected by the UE 10B in S2404 is not particularly limited. For example, a case where it is detected that the UE 10B is out of the coverage of the network may be used as a trigger.

The UE 10B performs attachment to the MME 44, based on the process of S2404 (S2406). After the attachment procedure is completed, the UE 10B causes the PGW 38 to perform radio resource control processing (S2408). At this time, the PGW 38 may assign a new IP address to the UE 10B. However, the UE 10B may require the PGW 38 to assign the designated IP address.

For example, in a case where a packet illustrated in Fig. 11(c) is transmitted in the direct communication from the UE 10B to the Relay UE 10A, the UE 10B uses the IP@B2 in an inner IP header, as an IP address of a transmission source. Thus, in a case where switching to the infrastructure communication is performed, the UE 10B assigns IP@B2 as an IP address, and thus the outer IP header 1107 in Fig. 11(c) can be removed, and the packet in Fig. 11(a) can be transmitted.

The processes of S2406 and S2408 may be performed based on detection of a trigger for requiring switching of a path. However, the processes may be performed based on a point that it is detected that the UE 10B is in the coverage of the network.

Then, the UE 10B transmits a routing-information update permission request to the ProSe server 20 (S2410). The routing-information update permission request in S2410 may include the identifier (ProSe ID B) of the UE 10B, may include the identifier (ProSe ID C) of the UE 10C, may include the "indication flag1", and may include a plurality of information elements.

In a case where the ProSe server 20 receives an information element including the "indication flag1" in the S2410, or in a case where the ProSe server 20 receives a message indicating the request, the ProSe server 20 permits update of the routing information, based on the "indication flag1" or based on the request (S2412).

The ProSe server 20 transmits a routing information update instruction to the UE 10B and the UE 10C based on the process of S2412 (S2414, S2416).

The routing information update instruction in S2414 may include the ProSe ID B, may include the ProSe ID C, may include the "indication flag2", or may include a plurality of information elements.

The routing information update instruction in S2416 may include the ProSe ID B, may include the ProSe ID C, may include the "indication flag3", or may include a plurality of information elements.

The UE 10B updates the routing information from the UE-to-Network Relay communication to the infrastructure communication, based on the "indication flag2" included in the routing information update instruction in S2414.

Similarly, the UE 10C updates the routing information from the UE-to-Network Relay communication to the infrastructure communication, based on the "indication flag3" included in the routing information update instruction in S2416.

The UE 10B updates the routing information based on the process of S2404 or based on the process of S2414 (S2430). For example, when the UE 10B updates the routing information based on the process of S2414, the routing information toward the UE 10C, which is recorded in the routing information table 142 of the storage unit 130 in the UE 10B is changed from Relay (UE 10A route) to the infrastructure communication.

The update of the routing information in S2430 may cause a packet transmitted from the UE 10B to be changed from the packet in Fig. 11(c) to the packet in Fig. 11(a), changed from the packet in Fig. 12(c) to the packet in Fig. 12(a), or changed from the packet in Fig. 13(c) to the packet in Fig. 13(a).

The UE 10C updates the routing information based on the process of S2416 (S2428). For example, when the UE 10C updates the routing information based on the process of S2416, the routing information toward the UE 10B, which is recorded in the routing information table 142 of the storage unit 130 in the UE 10C is changed to the infrastructure communication.

The update of the routing information in S2428 may cause a packet transmitted from the UE 10C to be changed from the packet in Fig. 11(e) to the packet in Fig. 11(b), or changed from the packet in Fig. 13(g) to the packet in Fig. 13(b).

With the above descriptions, regarding a communication between the UE 10B and the UE 10C, a path or a communication channel can be switched from the UE-to-Network Relay communication to the infrastructure communication or a path or a communication channel can be selected (S2202).

### [7. Seventh Embodiment]

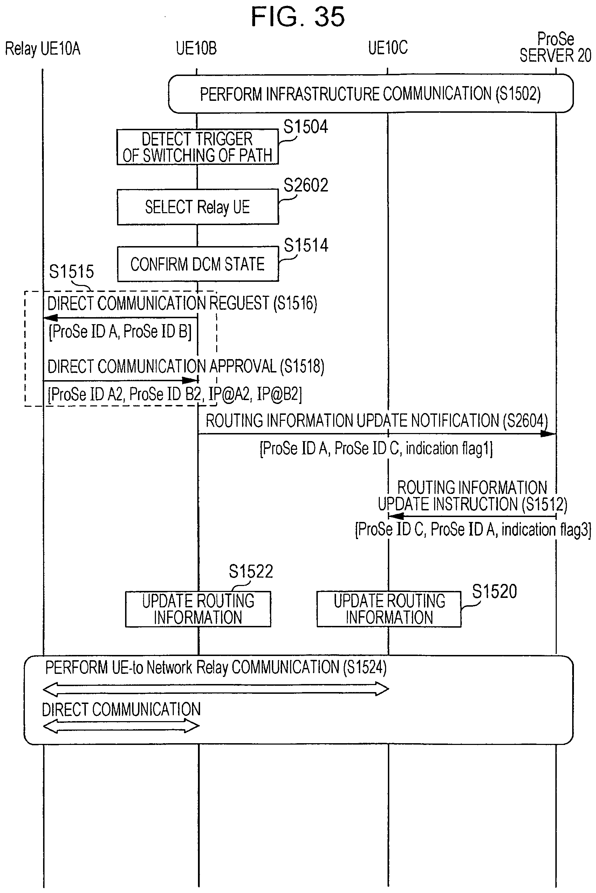

A seventh embodiment will be described with reference to Fig. 35. In the seventh embodiment, processing in which the UE 10B detects the Relay 10A and updates the routing information is provided. The same processing as that in Fig. 15 of the first embodiment is denoted by the same reference sign, and detailed descriptions will be omitted.

After the switching trigger for a path is detected (S1504), the UE 10B selects a Relay UE which is selectable (S2602). Here, in a case where the selectable Relay UE 10A is selected, the UE 10B confirms whether or not the direct communication is possible (S1514 to S1518).

In S2602, only a Relay UE which can perform the direct communication may be selected in advance. In this case, the processes of S1514 to S1518 are unnecessary.

The UE 10B updates the routing information based on the Relay UE 10A which can perform the direct communication (S1522). A result obtained by the update is transmitted to the ProSe server 20 as a routing information update notification (S2604).

An order of the processes of S1522 and S2604 is not particularly defined. The UE 10B may perform the process of S2604 after the process of S1522, or may perform the processes of S1522 and S2604 simultaneously.

Here, the routing update information notification includes at least the ProSe ID A of the selected Relay UE 10A. Thus, the ProSe server 20 detects that the route of the UE 10B is changed, and transmits the routing information update instruction to the UE 10C (S1512).

### [8. Modification Example]

Hitherto, the embodiments according to the invention are described in detail with reference to the drawings. However, the specific structure is not limited to these embodiments, and a design and the like in a range without departing from the gist of the invention can be included in the scope of claims.

A program operated in each device in each of the embodiments is a program (program of causing a computer to perform a function) for controlling a CPU and the like so as to realize the above-described functions of the embodiments. Information handled in the device is temporarily accumulated in a temporary storage device (for example, RAM) during processing. After that, the information is stored in various storage devices such as a ROM and a HDD. If necessary, the information is read by the CPU and modification or writing is performed.

Here, as a recording medium storing the program, any of a semiconductor medium (for example, ROM, a non-volatile memory card, or the like), an optical recording medium and an magneto-optical recording medium (for example, a digital versatile disc (DVD), a magneto optical disc (MO), a mini disc(MD), a compact disc (CD), a BD, and the like), a magnetic recording medium (for example, magnetic tape, flexible disc, and the like) may be provided. The loaded program is executed, and thus the above-described functions in the embodiments are realized. In addition, an operating system, another application program, and the like are commonly processed based on an instruction of the program, and thus the function of the present invention can be realized.

In a case where the present invention is distributed into the market, distribution can be performed in a form of a portable recording medium which has a program stored therein or be performed by transferring the program to a server computer which is connected through a network such as the Internet. In this case, a storage device in the server computer is also included in the present invention.

A portion or the entirety of each of the device in the above-described embodiments may be realized as large scale integration (LSI) which is a typical integrated circuit. Functional blocks in each of the device may be separately formed as a chip, or some or all of the functional blocks may be integrated and formed as a chip. A method of forming an integrated circuit is not limited to LSI, and may be realized by using a dedicated circuit or a public processor. In a case where the progress of the semiconductor technology causes a technology of forming an integrated circuit which replaces the LSI to be emerged, an integrated circuit obtained by using the emerged technology can be also used.

In the above-described embodiments, as an example of the radio access network, LTE and WLAN (for example, IEEE 802.11a/b/n) are described. However, connection may be performed by WiMAX instead of WLAN.

### Reference Signs List

- 1: RADIO COMMUNICATION SYSTEM
- 3 IP: MOBILE COMMUNICATION NETWORK
- 9: CORE NETWORK
- 10, 10A, 10B, 10C: UE
- 20: ProSe SERVER
- 100: CONTROL UNIT
- 110: FIRST TRANSMISSION AND RECEPTION UNIT
- 112: TRANSMIT AND RECEIVE ANTENNA
- 120: SECOND TRANSMISSION AND RECEPTION UNIT
- 122: TRANSMIT AND RECEIVE ANTENNA
- 130: STORAGE UNIT
- 132: ProSe ID MANAGEMENT TABLE
- 134: IP ADDRESS MANAGEMENT TABLE
- 136: OUTER IP ADDRESS MANAGEMENT TABLE
- 138: DCM STATE TABLE
- 142: ROUTING INFORMATION TABLE
- 144: In coverage FLAG
- 200: CONTROL UNIT
- 210: COMMUNICATION UNIT
- 220: STORAGE UNIT
- 222: ProSe ID MANAGEMENT TABLE
- 224: In coverage FLAG
- 226: UE POSITION INFORMATION MANAGEMENT TABLE
- 300: CONTROL UNIT
- 310: FIRST TRANSMISSION AND RECEPTION UNIT
- 312: TRANSMIT AND RECEIVE ANTENNA
- 315: Relay SIGNAL GENERATION UNIT
- 320: SECOND TRANSMISSION AND RECEPTION UNIT
- 314: TRANSMIT AND RECEIVE ANTENNA
- 330: STORAGE UNIT
- 332: ProSe ID MANAGEMENT TABLE
- 334: IP ADDRESS MANAGEMENT TABLE
- 336: OUTER IP ADDRESS MANAGEMENT TABLE
- 338: DCM STATE TABLE
- 340: In coverage FLAG

## Claims

1. A server device adapted to:
receive a routing-information update request message transmitted by a second terminal device, which performs communication with a first terminal device through a core network, from the first terminal device,
the routing-information update request message including at least identification information indicating that switching of a communication is required;
select a third terminal device having a relay function, based on the identification information; and
transmit a routing update instruction message which is a response to the routing-information update request message, and includes information of the third terminal device, to the first terminal device, and perform an instruction of performing a direct communication with the third terminal device by using LTE, so as to communicate with the first terminal device.

2. The server device according to Claim 1, further adapted to:
transmit the routing update instruction message to the second terminal device, and perform an instruction of communicating with the second terminal device which performs the direct communication with the third terminal device by using LTE.

3. A server device adapted to:
lead switching between a first communication in which a communication with a first terminal device is performed through a core network of a second terminal device, and a second communication in which the second terminal device performs a direct communication with a third terminal device so as to communicate with the first terminal device;
select the third terminal device having a relay function; and
transmit a routing update instruction message including information of the third terminal device, to the second terminal device, and perform an instruction of switching to the second communication.

4. The server device according to Claim 3, further adapted to:
transmit the routing update instruction message to the first terminal device, and perform an instruction of communicating with the second terminal device which performs a direct communication with the third terminal by using LTE.

5. A first terminal device which performs a communication with a second terminal device through a core network, the device adapted to:
transmit a routing-information update request message including at least identification information, to a server device by detecting a trigger of switching of a path, the identification information indicating that switching of a communication is required;
receive a routing update instruction message including information of a third terminal device which has been selected by the server device and has a relay function, from the server device; and
perform a direct communication with the third terminal device in accordance with the routing update instruction message by using LTE, so as to communicate with the second terminal device.
